(19) Europäisches Patentamt / European Patent Office / Office européen des brevets

(11) **EP 4 039 150 B1**

(12) **EUROPÄISCHE PATENTSCHRIFT**

(45) Veröffentlichungstag und Bekanntmachung des Hinweises auf die Patenterteilung:
**20.11.2024 Patentblatt 2024/47**

(21) Anmeldenummer: **22150881.5**

(22) Anmeldetag: **11.01.2022**

(51) Internationale Patentklassifikation (IPC):
**A47L 9/00** (2006.01)

(52) Gemeinsame Patentklassifikation (CPC):
**A47L 9/00;** A47L 2201/00

(54) **VERFAHREN FÜR EIN REINIGEN MIT EINEM REINIGUNGSROBOTER UND REINIGUNGSROBOTER**

CLEANING ROBOT AND METHOD FOR CLEANING WITH A CLEANING ROBOT

PROCÉDÉ DE NETTOYAGE À L'AIDE D'UN ROBOT NETTOYEUR ET ROBOT NETTOYEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2021 DE 102021200757**

(43) Veröffentlichungstag der Anmeldung:
**10.08.2022 Patentblatt 2022/32**

(73) Patentinhaber: **Vorwerk & Co. Interholding GmbH 42270 Wuppertal (DE)**

(72) Erfinder:
• **MOSEBACH, Andrej 59425 Unna (DE)**
• **HAYN, Henning 40723 Hilden (DE)**

(74) Vertreter: **Gille Hrabal Partnerschaftsgesellschaft mbB Patentanwälte Brucknerstraße 20 40593 Düsseldorf (DE)**

(56) Entgegenhaltungen:
EP-A1- 3 715 995     AT-U1- 10 154
US-A1- 2014 207 282     US-A1- 2016 135 655

EP 4 039 150 B1

**Beschreibung**

Die vorliegende Erfindung betrifft ein Verfahren für ein Reinigen einer Fläche eines Fußbodens in einem privaten Haushalt mit einem Reinigungsroboter. Die Erfindung betrifft außerdem einen Reinigungsroboter für die Durchführung des Verfahrens.

Reinigungsroboter wie Saug- oder Wischroboter werden in Privathaushalten vermehrt zur Reinigung des Fußbodens eingesetzt. Durch das leichte Gewicht und das geringe Bauvolumen können Haushaltsreinigungsroboter auch in Engbereichen den Fußboden reinigen. Es gibt auch gewerblich eingesetzte Reinigungsroboter für die industrielle Reinigung von beispielsweise Flughäfen und Hallen, die für ein selbstständiges Reinigen entsprechender Großflächen mit sehr großer Akku-Kapazität und Schmutzaufnahmekapazität ausgestattet sind. Industriereinigungsroboter sind daher entsprechend schwer und weisen ein großes Bauvolumen auf.

In einem Haushalt gibt es Bereiche, die sehr schnell verschmutzen und in vielen Haushalten mehrmals täglich gereinigt werden, während andere Bereiche weniger schnell und stark verschmutzt werden.

Reinigungsroboter und Verfahren zur Reinigung einer Fläche sind aus den Dokumenten US 2014/207282 A1, US 2016/135655 A1, EP 3 715 995 A1 und AT 10 154 U1 bekannt.

Es ist Aufgabe der Erfindung, Wohnungen von Privathaushalten verbessert reinigen zu können. Die Aufgabe der Erfindung wird mit einem Verfahren mit den Merkmalen des ersten Anspruchs gelöst. Ein Reinigungsroboter umfasst zur Durchführung des Verfahrens die Merkmale des Nebenanspruchs.

Zur Lösung der Aufgabe dient ein Verfahren zur Reinigung einer Fläche in einem Privathaushalt mit einem Reinigungsroboter, der mit mindestens einem Sensor zur Detektion von Hindernissen und zur Kartierung der Umgebung ausgestattet ist und/oder eine Reinigungsfahrt nach einer auf Basis von Sensorsignalen des Sensors geplanten Route durchführt. Der Reinigungsroboter weist Räder zum Fortbewegen in eine Fahrtrichtung und einen Reinigungsmechanismus für das Reinigen auf. Die Räder und der Reinigungsmechanismus werden durch mindestens einen Elektromotor angetrieben, der mithilfe mindestens eines Akkus des Reinigungsroboters mit elektrischer Energie versorgt wird. Durch die Räder kann der Reinigungsroboter bewegt werden, ohne dass ein Benutzer den Reinigungsroboter für ein Reinigen zu ziehen oder zu schieben braucht. Die Bauhöhe des Reinigungsroboters liegt zwischen 0,12 m und 0,5 m. Der Reinigungsroboter kann daher nicht unter Möbelstücken saugen, unter denen Reinigungsroboter mit einer Bauhöhe von beispielsweise 10 cm oder weniger saugen können. Das Gewicht W des Reinigungsroboters ist weniger als 20 kg. Die maximal mögliche Betriebsgeschwindigkeit des Reinigungsroboters ist weniger als 1,50 km/h. Der Reinigungsroboter kann also nicht schneller als 1,50 km/h während einer Reinigung automatisiert bewegt werden. Eine Flächenleistung A des Reinigungsroboters beträgt bei DPU>50% wenigstens 220 m². Die Flächenleistung ist geringer als 950 m². Die Flächenleistung A mit der Einheit [m²] beschreibt die Größe einer Fläche, die nach einem vollständigen Aufladen aller Akkus des Reinigungsroboters bei DPU > 50% oder mit der maximalen Geschwindigkeit $v_{max}$ bei DPU > 50% gereinigt werden kann.

Ein Reinigungsroboter im Sinne der vorliegenden Offenbarung ist ein Roboter, der Partikel aufnehmen kann. Ein Reinigungsroboter kann eine Fläche reinigen, ohne dass während des Reinigungsvorgangs ein Benutzer erforderlich ist. Der Reinigungsroboter kann ein Saugroboter oder ein Wischroboter sein. Ein Wischroboter verfügt über ein Wischelement, beispielsweise einen Lappen, Mob, Schwamm oder Reinigungsgewebe. Das Wischelement kann Wasser aufnehmen. Ein Wischroboter kann ein Gebläse zum Ansaugen von Schmutz aufweisen und/oder so eingerichtet sein, dass das Wischelement translatorisch und/oder rotatorisch relativ zum Gehäuse des Wischroboters bewegt werden kann, um Schmutzpartikel aufzunehmen. Das Wischelement ist lösbar an dem Wischroboter angebracht und kann vom Benutzer zwecks Reinigung abgenommen und gewechselt werden. Ein Saugroboter kann selbstständig eine Fläche durch Saugen reinigen. Der Saugroboter verfügt über ein Gebläse, durch das Luft angesaugt werden kann. Der Saugroboter hat einen Behälter, in dem aufgesaugte Partikel gesammelt werden. Der Saugroboter verfügt über wenigstens einen Filter, durch den angesaugte, mit Partikeln beladene Luft von Staub getrennt wird. Die dadurch gereinigte Luft wird anschließend aus dem Saugroboter herausgeblasen. Wenn der Saugroboter im Wesentlichen durch ein Einsaugen von Schmutz über eine Düse oder Saugöffnung eine Fläche reinigt, kann die Reinigungsbreite der Breite der Düse bzw. Saugöffnung entsprechen. Solche Saugroboter können beispielsweise zur Reinigung von Laminatböden eingesetzt werden. Für die Reinigung beispielsweise von Teppich oder Flächen mit Teppich und Hartboden verfügt ein Saugroboter bevorzugt über eine Kehreinheit, die die Aufnahme von Partikeln unterstützt. Auch ein Reinigungsroboter, der nicht saugen kann, verfügt in einer Ausgestaltung über eine Kehreinheit. Die Kehreinheit kann eine Kehrwalze sein, die drehbar gelagert ist und während der Reinigung durch den Motor angetrieben wird. Eine Kehrwalze ist insbesondere mit abstehenden Borsten, Leisten und/oder Noppen versehen, um Partikel in einen Saugroboter hinein transportieren zu können. Insbesondere kann bei Vorsehen einer Kehrwalze die Reinigungsbreite vereinfachend auch mit der Breite der Kehrwalze gleichgesetzt werden. Alternativ oder ergänzend kann die Kehreinheit ein oder zwei Eckbürsten umfassen. Eine Eckbürste kann wie eine Topfbürste um eine vertikale Drehachse rotieren. Eine Kehreinheit kann aus zwei Eckbürsten ohne eine Kehrwalze bestehen. Bei einem solchen Reinigungsmechanismus wird der Schmutz durch die Eckbürsten mit oder ohne Ansaugen unter oder in den Reinigungsroboter gebürstet.

Ein Reinigungsroboter kann wie eingangs erwähnt für unterschiedliche Anwendungszwecke ausgelegt sein. Es gibt Reinigungsroboter für den industriellen Einsatz, die für das Reinigen großer Flächen beispielsweise eines Flughafens oder Hallen ausgelegt sind und daher Flächen von 500 m² und mehr reinigen. Um dies zu erreichen, sind solche industriellen Reinigungsroboter besonders leistungsstark und können besonders schnell bewegt werden. Übliche maximal mögliche Betriebsgeschwindigkeiten $S_{max}$ von solchen Industrie-Reinigungsrobotern betragen deutlich mehr als 1,50 km/h. Ein für industrielle Zwecke ausgelegter Reinigungsroboter ist daher groß und schwer im Vergleich zu einem Reinigungsroboter, der für das Reinigen von Privathaushalten vorgesehen ist. Mit industriellen Reinigungsrobotern sind Flächenleistungen A von mehr als 950 m² bei DPU > 50% möglich, wobei $A = v_{max} \cdot s_B \cdot T \cdot 3600$. Dabei ist $v_{max}$ = maximale Geschwindigkeit in [m/s], also in Meter pro Sekunde, bei DPU > 50%, $s_B$ = Reinigungsbreite in [m], also in Metern, und T = maximale Laufzeit in [h], also in Stunden, bei der maximalen Geschwindigkeit $v_{max}$ bei DPU > 50%. Die maximale Laufzeit T ist die Betriebsdauer, die mit einer Vollladung des Akkus oder der Akkus des Reinigungsroboters bei der maximalen Geschwindigkeit $v_{max}$, mit der das Kriterium DPU > 50% über die Reinigungsbreite gerade eben erfüllt wird, möglich ist. Vollladung meint, dass alle Akkus des Reinigungsroboters zu Beginn einer Zeitmessung vollständig aufgeladen sind. DPU meint die Staubaufnahme. Die Messung kann auf Hartboden erfolgen, vorzugsweise aus unbehandelten laminierten Kiefernschichtplatten insbesondere mit einer Dicke von mindestens 15 mm. Alternativ kann die Messung auf Teppich erfolgen, vorzugsweise Wilton Teppich, insbesondere gemäß IEC TS 62885-1. Ein bevorzugter Messaufbau sowohl für Hartboden als auch für Teppich ist in der Norm IEC-62885-7 in der zum Anmeldetag gültigen Fassung angegeben, insbesondere für mittlere Verschmutzung (medium debris). Dies gilt auch für die übrigen Parameter wie beispielsweise für die Faseraufnahme, Grobgutaufnahme, maximale Geschwindigkeit bei DPU > 50% sowie die entsprechenden Parameter zu Ermittlung der Flächenleistung. DPU steht für "dust pick-up rate". DPU>50% bedeutet also, dass die Staubaufnahme von der zu reinigenden Fläche mehr als 50% beträgt. Die Reinigungsbreite ist die Breite quer zur Fahrtrichtung, die der Reinigungsroboter in der Lage ist, bei einer Vorwärtsbewegung in Fahrtrichtung während einer Reinigungsfahrt mit DPU > 50% zu reinigen.

Ein Reinigungsroboter für einen Haushalt soll auch unter Möbelstücken wie Betten und Couchgarnituren saugen können. Daher wird bei einem solchen Reinigungsroboter eine geringe Bauhöhe angestrebt. Außerdem soll der Durchmesser eines solchen Reinigungsroboters bzw. dessen maximale Ausdehnung parallel zu der zu reinigenden Fläche relativ klein sein, damit er auch in Engstellen hineinfahren kann, um hier reinigen zu können. Im Vergleich zu einem Industrie-Reinigungsroboter ist die Leistung gering und die maximal mögliche Betriebsgeschwindigkeit liegt unterhalb von 1,50 km/h. Ein Beispiel für einen solchen Haushalts-Reinigungsroboter ist der VR300 der Firma Vorwerk, der unter Haushaltsreinigungsrobotern bereits als besonders leistungsstark gilt. Die Flächenleistung A des Reinigungsroboters VR300, d.h., bei DPU > 50%, liegt bei 129,6 m². Seine maximal mögliche Betriebsgeschwindigkeit beträgt 1,2 km/h. Die Fläche wird durch den Reinigungsroboter für mindestens eine Woche wenigstens zweimal täglich gereinigt, wobei auf der zu reinigenden Fläche wenigstens ein Möbelstück mit einer Durchfahrtshöhe von nicht mehr als 10 cm vorhanden ist.

Der Erfindung liegt nachfolgend erläuterte Erkenntnis zugrunde.

In einem Haushalt gibt es Bereiche, die sehr schnell verschmutzt werden. Beispielsweise werden Bereiche um einen Esstisch herum häufig mehrmals am Tag verschmutzt. Häufig benutzte Laufwege innerhalb einer Wohnung können ebenfalls relativ schnell verschmutzt werden. Sollen solche Bereiche sauber gehalten werden, dann kann es erforderlich sein, dass diese mehrmals täglich gereinigt werden müssen. Andere Bereiche innerhalb einer Wohnung werden zumindest nicht unmittelbar verschmutzt. Dies betrifft typischerweise Bereiche unterhalb von Betten oder Couchgarnituren mit niedriger Durchfahrtshöhe. Partikel und Staub gelangen in solche Bereiche nicht unmittelbar hinein, sondern werden beispielsweise durch Luftbewegungen von seitlich angrenzenden Flächen in solche Bereiche hinein transportiert.

Auf der zu reinigenden Fläche befindet sich wenigstens ein Möbelstück mit einer Durchfahrtshöhe von maximal 10 cm. Ein Reinigungsroboter kann daher nur dann Staub unter dem Möbelstück entfernen, wenn die Bauhöhe des Reinigungsroboters kleiner als 10 cm ist. Durch die Bauhöhe von mehr als 0,12 m wird erreicht, dass der erfindungsgemäße Reinigungsroboter keine Bereiche reinigt, in die Staub und Partikel nicht unmittelbar gelangen.

Es können und sollen solche Bereiche von dem erfindungsgemäßen Reinigungsroboter also nicht gereinigt werden.

Eine maximal mögliche Betriebsgeschwindigkeit des Reinigungsroboters von weniger als 1,50 km/h trägt dafür Sorge, dass der Reinigungsroboter nicht mit übermäßig hoher Geschwindigkeit während einer Reinigung bewegt werden kann. Eine übermäßig hohe Geschwindigkeit könnte Möbelstücke in Privathaushalten beschädigen. Dies wird durch die Limitierung der Geschwindigkeit vermieden. Der Anhalteweg kann so reduziert und die Sicherheit erhöht werden. Das ist im vorliegenden Fall besonders wichtig, weil die Masse des Reinigungsroboters vergleichsweise groß ist im Vergleich zu üblichen Haushaltsreinigungsrobotern.

Die Flächenleistung beträgt wenigstens 220 m² bei DPU von 50%. Trotz der relativ geringen Geschwindigkeit des Reinigungsroboters während des Reinigens kann dennoch eine vergleichsweise große Fläche in kurzer Zeit gereinigt werden und zwar verglichen mit der Flächenleistung eines üblichen Reinigungsroboters für private Haushalte. Zwar ist daher regelmäßig eine relativ große Breite der Kehrwalze erforderlich, um die Flächenleistung trotz relativ geringer Geschwindigkeit zu erreichen. Daher ist ein erfindungsgemäßer Reinigungsroboter grundsätzlich breiter als übliche Reinigungsroboter, die in privaten Haushalten eingesetzt werden. Es werden daher grundsätzlich nicht nur Bereiche unter Möbelstücken mit niedriger Durchfahrtshöhe von einer Reinigung zwingend ausgenommen, sondern auch Engstellen, die typischerweise ebenfalls nicht unmittelbar und daher kaum verschmutzt werden.

Weil die zu reinigende Fläche durch den Reinigungsroboter für mindestens eine Woche wenigstens zweimal täglich gereinigt wird, werden die Bereiche mit hoher Frequenz gereinigt, die leicht und wiederholt verschmutzen. Aufgrund der Bauart des Reinigungsroboters werden Bereiche zwingend ausgenommen, die kaum verschmutzen und vor allem dann nicht, wenn daran angrenzende Bereiche, also daran angrenzende Flächen, mit hoher Frequenz gereinigt werden.

Es wird also durch die Erfindung erreicht, dass dort oft gereinigt wird, wo es erforderlich ist, und nicht erforderliche Bereiche ausgenommen werden, ohne dies programmieren zu müssen. Ein überflüssiges Reinigen wird also vermieden, um Zeit zu sparen. Störungen durch das häufige Reinigen werden so minimiert.

Es kommt bei dem erfindungsgemäßen Reinigungsroboter also darauf an, dass dieser eine große Flächenleistung erzielt, um möglichst wenig zu stören, da dieser erfindungsgemäß grundsätzlich zumindest zweimal täglich für einen längeren Zeitraum eingesetzt wird. Es kommt dagegen nicht darauf an, dass ein solcher Reinigungsroboter über komplizierte Navigationseigenschaften verfügt, um zum Beispiel Engstellen zuverlässig zu reinigen. Durch die Bauart des Reinigungsroboters wird grundsätzlich erreicht, dass ein zeitaufwendiges Manövrieren aufgrund von Engstellen minimiert wird.

Die Bauhöhe beträgt vorzugsweise nicht mehr als 0,5 m, um unter Esstischen saugen zu können. Besonders bevorzugt beträgt die Bauhöhe nicht mehr als 0,4 m, um auch unter üblich hohen Stühlen saugen zu können.

Die Erfindung betrifft auch einen Reinigungsroboter zur Durchführung des Verfahrens. Die oben beschriebenen Merkmale, Ausführungsformen und Definitionen gelten auch auf diesen Aspekt der Erfindung. Der Reinigungsroboter ist mit mindestens einem Sensor zur Detektion von Hindernissen und zur Kartierung der Umgebung ausgestattet und/oder zur Durchführung einer Reinigungsfahrt nach einer auf Basis von Sensorsignalen des Sensors geplanten Route eingerichtet. Sensorsignale können analoge oder digitale Signale sein. Der Sensor gibt vorzugsweise analoge Messwerte ab. Eine Signalverarbeitungseinheit kann vorgesehen sein, um die analogen Messwerte zu verarbeiten und digitale Sensorsignale bereitzustellen. Die Sensorsignale enthalten Informationen über einen Abstand, ein Hindernis und/oder eine insbesondere geometrische Umgebungseigenschaft. Bei einem solchen Reinigungsroboter handelt es sich also um einen sogenannten "intelligenten" Reinigungsroboter mit Kartierungssystem. Im Unterschied dazu gibt es auch eine andere Klasse von Reinigungsrobotern, die vereinfacht beschrieben im Wesentlichen stets geradeaus fahren und erst bei einer Kollision mit einem Hindernis die Richtung ändern, um auf diese Weise gewissermaßen nach dem Zufallsprinzip ein zu reinigende Fläche abzufahren.

Der Reinigungsroboter weist Räder zum Fortbewegen in eine Fahrtrichtung und einen Reinigungsmechanismus für das Reinigen auf. Die Räder und der Reinigungsmechanismus werden durch mindestens einen Motor angetrieben, der mithilfe mindestens eines Akkus des Reinigungsroboters mit elektrischer Energie versorgt wird. Wenn der Reinigungsroboter ein Saugroboter ist, umfasst dieser ein Gebläse, durch das Luft angesaugt werden kann, einen Behälter, in dem aufgesaugte Partikel gesammelt werden, sowie wenigstens einen Filter, durch den angesaugte, mit Partikeln beladene Luft von Staub getrennt wird. Der Saugroboter kann eine durch den Motor angetriebene Kehreinheit umfassen, die als eine Komponente des Reinigungsmechanismus das Aufnehmen von Partikeln unterstützt. Bevorzugt ist die Kehreinheit bei einem Saugroboter eine Kehrwalze. Die Kehrwalze dreht sich während einer Reinigung. Es können dadurch Partikel auf der zu reinigenden Fläche erfasst werden und in den Saugroboter hinein transportiert werden. Der Reinigungsroboter kann ein Kehrroboter sein, der nicht saugen kann. Der Reinigungsmechanismus umfasst dann eine durch den Motor bewegbare Kehreinheit mit einer oder mehreren Kehrbüsten wie z.B. Eckbürsten, mit denen Schmutzpartikel (ohne ein Ansaugen) auf der zu reinigenden Fläche erfasst und in den Reinigungsroboter hinein transportiert werden. Der Reinigungsroboter kann ein Wischroboter sein, bei dem der Reinigungsmechanismus ein Wischelement zum Reinigen durch feuchtes Wischen umfasst.

Die Bauhöhe des Reinigungsroboters ist 0,12 m bis 0,5 m. Das Gewicht W des Reinigungsroboters liegt bei weniger als 20 kg. Die maximal mögliche Betriebsgeschwindigkeit des Reinigungsroboters ist weniger als 1,50 km/h. Vorzugsweise wird die maximal mögliche Betriebsgeschwindigkeit durch eine gesteuerte Drosselung der Geschwindigkeit erreicht, so dass bei Böden mit höherem Reibwiderstand, z.B. Teppichböden, dennoch die gleiche maximal mögliche Betriebsgeschwindigkeit im Betrieb realisiert werden kann wie bei Böden mit geringerem Reibwiderstand, z.B. Hartböden.

Die Flächenleistung A bei DPU>50% des Reinigungsroboters beträgt 220 m² bis 950 m². Die Flächenleistung ist $A = v_{max} \cdot s_B \cdot T \cdot 3600$, wobei $v_{max}$ = maximale Geschwindigkeit in [m/s] bei DPU > 50%, Se = Reinigungsbreite des Reinigungsroboters in [m] sowie T = maximale Laufzeit in [h] bei der maximalen Geschwindigkeit

$v_{max}$ bei DPU > 50% ist. Die Reinigungsbreite ist die Breite quer zur Fahrtrichtung, die der Reinigungsroboter in der Lage ist, bei einer Vorwärtsbewegung in Fahrtrichtung während einer Reinigungsfahrt zu reinigen.

Die Besonderheit des Reinigungsroboters besteht darin, dass dieser für den Anwendungsfall optimiert ist, dass mit hoher Frequenz die Bereiche in einem privaten Haushalt gereinigt werden, die leicht verschmutzt werden. Durch seine Bauart wird erreicht, dass regelmäßig Bereiche ausgelassen werden, die nicht leicht verschmutzt werden. Damit der Reinigungsroboter mit hoher Frequenz saugen kann, ist seine Flächenleistung groß im Vergleich zu Flächenleistung üblicher Reinigungsroboter, die für einen Einsatz in privaten Haushalten eingesetzt werden. Von üblichen Industrie-Reinigungsrobotern unterscheidet sich der erfindungsgemäße Reinigungsroboter vor allem durch seine relativ geringe maximal mögliche Betriebsgeschwindigkeit.

In einer Ausführungsform beträgt der maximale Energiegehalt je Akku 100 Wh. In einer Ausführungsform beträgt der gesamte Energiegehalt des einen Akkus oder der mehreren Akkus insgesamt mindestens 100 Wh und/oder höchstens 200 Wh. Der Energiegehalt betrifft also die Summe der Akkus, falls mehrere Akkus vorgesehen sind. Diese Auswahl hat sich als besonders geeignet herausgestellt, um den Reinigungsroboter in genannter Weise einsetzen zu können. Der Energiegehalt eines solchen Akkus ist deutlich größer als der Energiegehalt eines Akkus für einen Reinigungsroboter, der üblicherweise in privaten Haushalten eingesetzt werden soll. Der Energiegehalt des Akkus ist andererseits deutlich geringer als der Energiegehalt eines Akkus, wie dieser bei einem industriellen Reinigungsroboter regelmäßig vorgesehen wird.

In einer Ausführungsform wird der Reinigungsroboter durch genau zwei Akkus mit elektrischer Energie versorgt. Durch den Einsatz von genau zwei Akkus kann ein geeigneter Energiegehalt besonders benutzerfreundlich bereitgestellt werden. Ein Akku ist eine Batterie, die wieder aufgeladen werden kann. Ein Akku ist eine Baueinheit, die von einem anderen Akku räumlich getrennt im Reinigungsroboter angeordnet sein kann. Vorzugsweise kann der Akku vom Benutzer manuell aus dem Reinigungsroboter zum Aufladen entfernt und wiedereingesetzt werden. Alternativ ist auch ein fest verbauter Akku möglich, der beispielsweise über ein Kabel oder elektrische Kontakte zum Verbinden mit einer Station aufgeladen wird. Ein Akku kann auch als Akkupack bezeichnet werden. Das Vorsehen von genau zwei oder auch mehr als zwei Akkupacks hat den Vorteil, dass das Gewicht der Akkus geeignet verteilt angeordnet werden kann.

Der Akku oder die Akkus sind vorzugsweise so ausgelegt, dass sie innerhalb von drei Stunden vollständig wieder aufgeladen werden können. Auch dadurch wird gewährleistet, dass der Reinigungsroboter mehrmals am Tag eine Fläche eines Fußbodens in einem privaten Haushalt reinigen kann.

In einer Ausführungsform beträgt das Gewicht W des Reinigungsroboters mehr als 5 kg, bevorzugt mindestens 6 kg, und/oder höchstens 18 kg. Die gewünschten Eigenschaften können hierdurch bereitgestellt werden. Das Gewicht W des Reinigungsroboters beträgt insbesondere nicht mehr als 13 kg. Versuche haben gezeigt, dass ein Reinigungsroboter mit beispielsweise 8 kg in besonders optimaler Weise die gewünschten Eigenschaften erzielt. Das Gewicht des Reinigungsroboters übersteigt damit das Gewicht eines üblichen Reinigungsroboters, der in privaten Haushalten staubsaugen soll. Insbesondere kann das Gewicht durch die Auswahl der Akkus zur Bereitstellung eines gewünschten Energiegehaltes beeinflusst werden.

In einer Ausführungsform beträgt die Filterfläche eines insbesondere als Saugroboter ausgestalteten Reinigungsroboters wenigstens 329 cm$^2$, besonders bevorzugt mehr als 450 cm$^2$. Bei dem erfindungsgemäßen Reinigungsroboter wird ausgenutzt, dass dieser relativ groß im Vergleich zu üblichen Reinigungsrobotern für Privathaushalte sein und daher auch Platz für eine große Filterfläche bereitstellen kann. Große Filterflächen sind mit dem Vorteil verbunden, dass Strömungsverluste von Luft geringgehalten werden können. Beispielsweise kann durch die oben angegebene Filterfläche besonders zuverlässig bei DPU > 50% eine maximale Geschwindigkeit und eine maximale Laufzeit T zur Erzielung einer Flächenleistung zwischen mindestens 300 m$^2$ und/oder höchstens 950 m$^2$ erreicht werden. Die maximale Laufzeit T kann anstatt mit einer Messung auch rechnerisch mithilfe des gesamten Energiegehaltes (oder eines Kapazitätswerts) des oder der Akkus und der Leistungsaufnahme des Reinigungsroboters für eine Reinigung einer Fläche bei DPU >50% ermittelt werden.

Mit Filterfläche ist die für ein Filtern von eingesaugter Schmutzluft vorgesehene Fläche des Filters oder der Filter gemeint. Zur Filterfläche trägt daher beispielsweise nicht ein Filterrahmen aus Kunststoff oder Pappe bei, sondern nur ein Filtermaterial, beispielsweise eine Filtermembran des Filters. Das Filtermaterial ist so beschaffen, dass es Schmutz wirksam und effektiv aus Luft filtert, die durch das Filtermaterial strömt. Dabei ist die Filterfläche insbesondere auf den Filter bezogen, d.h., die Filterkomponente, die vom Benutzer gewechselt oder gereinigt werden kann, z.B. ein Staubbeutel oder ein Staubabscheider. Die Filterfläche bezieht sich auf die Luftdurchgangsfläche durch ein oder mehrere filternde Materialien des Filters. Wenn beispielsweise eine Filterkomponente zum Austauschen einen Aufbau aufweist, der eine Doppelmembran oder mehrere Filtermembranschichten hintereinander umfasst, die sich alle über eine gemeinsame Luftdurchgangsfläche erstrecken, so hat dieser Filter die gleiche Filterfläche wie ein Ein-Membran-Filter mit derselben Luftdurchgangsfläche. Bei einem Filter, der eine gefaltete Form hat, bezieht sich die Filterfläche auf die entfaltete Fläche. Insbesondere wird ein HEPA Filtermaterial eingesetzt, vorzugsweise zertifiziert entsprechend der Norm EN 1822. Insbesondere enthält oder ist das Filtermaterial Vlies.

Alternativ oder ergänzend ist oder enthält der Filter oder das Filtermaterial eine poröse Fluorkunststofffolie, vorzugsweise eine PTFE-Membran, für Luftfilter. Alternativ oder ergänzend ist oder enthält der Filter oder das Filtermaterial spinngebundenes Vlies-Gewebe (engl. Spunbounded non-woven fabric), vorzugsweise ein oder zwei Lagen mit jeweils einem Gewicht von mindestens 5 g/m$^2$ und/oder höchstens 100 g/m$^2$. Vorzugsweise beträgt die Dicke des Filtermaterials mindestens 0,1 mm und/oder höchstens 1 mm. Das Filtermaterial wird vorzugsweise zickzackförmig gefaltet und/oder in einem vorzugsweise rechteckigen Rahmen befestigt. Alternativ oder ergänzend ist eine mehrlagige oder mehrschichtige Anordnung vorgesehen, vorzugsweise mit drei oder genau drei Lagen. In einer Ausgestaltung beträgt der Abscheidegrad des Filters (an der Filterfläche) mindestens 80%, bevorzugt mindestens 90%, besonders bevorzugt ungefähr oder genau 99,97%, insbesondere bei einer Partikelgröße von 0,3 bis 0,5 μm. In einer Ausgestaltung ist ein Aufbau mit einer Lage aus spinngebundenen Vlies-Gewebe vorzugsweise mit einem spezifischen Gewicht von 15 g/m$^2$ und/oder einer Lage aus einer poröse Fluorkunststofffolie, vorzugsweise eine PTFE-Membran und/oder einer Lage aus einem gebundenen Vlies-Gewebe bevorzugt mit einem spezifischen Gewicht von 70 g/m$^2$ vorgesehen, insbesondere von drei Lagen in genau der zuvor genannten Reihenfolge. In einer Ausgestaltung ist ein Filter mit einem Druckabfall (an der Filterfläche) von mindestens 130 Pa und/oder höchstens 220 Pa vorgesehen, besonders bevorzugt mit einem Druckabfall von ungefähr oder genau 170 Pa. Vorzugsweise beträgt eine Dicke einer Lage des Filtermaterials 0,32 mm oder die Gesamtdicke eines mehrlagigen Filtermaterials beträgt 0,32 mm. Vorzugsweise hat das Filtermaterial oder die Filterfläche ein Gewicht von 85 g / m$^2$.

Die Filterfläche des Reinigungsroboters beträgt vorzugsweise nicht mehr als 900 cm$^2$, besonders bevorzugt nicht mehr als 700 cm$^2$. Eine solche Filterfläche ist kleiner als eine Filterfläche, die bei einem industriellen Reinigungsroboter vorgesehen sein kann. Es wird dadurch vermieden, dass der Reinigungsroboter übermäßig groß gebaut sein muss, was für seinen Einsatzzweck in privaten Haushalten ungünstig wäre.

In einer Ausführungsform beträgt die maximale Gebläseleistung eines insbesondere als Saugroboter ausgestalteten Reinigungsroboters mindestens 25 W. Es hat sich als zweckmäßig herausgestellt, eine Gebläseleistung von wenigstens 25 W auszuwählen. Eine maximale Gebläseleistung von zum Beispiel 27 Watt wird auch bei anderen Reinigungsrobotern vorgesehen, die in privaten Haushalten eingesetzt werden. Die Gebläseleistung des erfindungsgemäßen Reinigungsroboters kann also vergleichbar mit der Gebläseleistung eines Reinigungsroboters sein, der in einem privaten Haushalt eingesetzt wird. Der Grund ist, dass der erfindungsgemäße Reinigungsroboter ebenfalls in einem privaten Haushalt eingesetzt werden soll und folglich vergleichbare Anforderungen in Bezug auf Partikelaufnahme zu erfüllen sind. Ferner wird die Akkukapazität, die für eine höhere Gebläseleistung gebraucht würde, vorliegend in eine zeitlich längere Reinigungsreichweite eingesetzt oder zur Reduzierung der Akkukapazität und damit des Gewichts genutzt, um den erfindungsgemäßen Effekt besonders wirksam zu unterstützen. Die maximale Gebläseleistung beträgt vorzugsweise nicht mehr als 30 W. Damit liegt die Gebläseleistung in der Größenordnung, wie diese auch bei anderen Reinigungsrobotern, die in privaten Haushalten eingesetzt werden, vorgesehen werden. Gebläseleistungen bei industriellen Reinigungsrobotern können deutlich größer sein, da hier andere Anforderungen zu beachten sein können.

In einer Ausführungsform beträgt das Bauvolumen BV des Reinigungsroboters mehr als 10 L (Liter), bevorzugt mindestens 11 L, vorzugsweise wenigstens 15 L. Damit ist das Bauvolumen größer als das Bauvolumen üblicher Reinigungsroboter, die in privaten Haushalten eingesetzt werden. Bauvolumen meint das Volumen, das aus den äußeren Abmessungen ermittelt wird. Der erfindungsmäße Reinigungsroboter ist nicht zu klein gebaut, damit dieser möglichst keine Zeit für das Reinigen von solchen Bereichen aufwendet, die nur selten gereinigt werden müssen. Das Bauvolumen des Reinigungsroboters beträgt vorzugsweise BV < 40 L, besonders bevorzugt BV ≤ 30 L, da der erfindungsgemäße Reinigungsroboter für seinen Einsatzzweck in einem privaten Haushalt auch nicht zu groß gebaut sein soll. Das Bauvolumen eines industriellen Sauroboters kann deutlich größer als 40 L sein.

Der Volumenstrom an der Saugdüse des Reinigungsroboters kann 10 bis 14 l/s (Liter pro Sekunde) betragen. Dies ist der Volumenstrom, der bei einem Reinigungsroboter für private Haushalte üblich ist. Die Saugdüse kann eine Saugöffnung des Reinigungsroboter sein, durch welche der Schmutz vom Boden aufgesaugt und zum Filter befördert wird. Der Volumenstrom ist so ausgewählt worden, da der Reinigungsroboter in privaten Haushalten eingesetzt werden soll und folglich Partikel entfernen soll, wie diese in privaten Haushalten üblicherweise in Form von Verschmutzung auftreten. Bei einem industriellen Reinigungsroboter kann der Volumenstrom deutlich größer sein, da bei einem industriellen Einsatz andere Anforderungen zu beachten sein können, die größere Volumenströme an der Düse erfordern können.

Der Volumenstrom des Gebläses kann wenigstens 20 l/s und/oder bis zu höchstens 40 l/s oder höchstens 60 l/s (Liter pro Sekunde) betragen. Dieser Volumenstrom entspricht aus vorgenannten Gründen dem Volumenstrom, der bei Reinigungsrobotern üblich ist, die im privaten Haushalt eingesetzt werden sollen. Bei industriell eingesetzten Reinigungsrobotern können aufgrund anderer Anforderungen größere Volumenströme vorgesehen sein.

In einer Ausführungsform beträgt die Reinigungsbreite wenigstens 25 cm, bevorzugt mindestens 28 cm, und/oder höchstens 35 cm, bevorzugt höchstens 32 cm. Wenn der Reinigungsroboter eine Kehrwalze umfasst, hat die Kehrwalze eine Breite von wenigstens 25 cm, bevorzugt mindestens 28 cm, und/oder höchstens 35 cm, bevorzugt höchstens 32 cm. Der Bereich zwischen 25 cm und 35 cm entspricht dem Bereich zwischen üblichen Reinigungsbreiten von Saurobotern, die im privaten Haushalt eingesetzt werden. Übliche Kehrwalzen von Saurobotern, die im industriellen Bereich eingesetzt werden, haben häufig eine Breite von mindestens 32 cm. Es wird dem Umstand Rechnung getragen, dass Flächen an einem Tag gereinigt werden sollen, die zwischen den Flächen liegen, die ein Reinigungsroboter für den privaten Haushalt üblicherweise täglich reinigen soll und den Flächen, die ein industrieller Reinigungsroboter üblicherweise täglich reinigen soll.

In einer Ausführungsform beträgt die maximale Geschwindigkeit $v_{max}$ wenigstens 0,3 m/s bei DPU > 50%. Ein besonders effizientes Reinigen von entlegenen Stellen, zu denen Schmutz gewöhnlich durch Luftströmungen transportiert wird, kann so ermöglicht werden. Je langsamer sich der Reinigungsroboter in Fahrrichtung bewegt, desto größer ist der DPU-Wert und je schneller sich der Reinigungsroboter in Fahrrichtung bewegt, desto geringer ist der DPU-Wert entsprechend. Die maximale Geschwindigkeit bei DPU > 50% ist genau die Geschwindigkeit, bei der der Reinigungsroboter mindestens DPU > 50% gerade eben erzielt. Ein Reinigungsroboter, der üblicherweise in Privathaushalten eingesetzt wird, kann in der Regel lediglich mit langsameren Geschwindigkeiten von zum Beispiel 0,2 m/s eine Reinigung mit DPU > 50 % erreichen. Insbesondere ist die maximale Geschwindigkeit $v_{max}$ ungefähr oder höchstens 0,415 m/s bei DPU > 50%.

In einer Ausgestaltung beträgt die Flächenleistung A des Reinigungsroboters vorzugsweise wenigstens 500 m², besonders bevorzugt wenigstens 600 m² bei DPU>50%. Eine Obergrenze für den genannten Einsatzzweck ist eine Flächenleistung von nicht mehr als 900 m², da in der Praxis grundsätzlich kein Bedarf für noch höhere Flächenleistungen besteht. Die Flächenleistung mit einem Wert ab 500 m² des erfindungsgemäßen Reinigungsroboters ist damit deutlich höher als die Flächenleistung von üblichen Reinigungsrobotern, die im privaten Haushalt eingesetzt werden. Bei einer Obergrenze von 900 m² reicht die Flächenleistung des erfindungsgemäßen Reinigungsroboters nicht an die Flächenleistung heran, die industrielle Sauroboter in der Regel erreichen können.

In einer Ausgestaltung beträgt die maximale Staubaufnahme DPU weniger als 80%, vorzugsweise weniger als 70%. Da der erfindungsgemäße Reinigungsroboter für einen häufigen Einsatz vorgesehen ist, besteht nicht das Problem, festgetretenen Schmutz entfernen zu sollen. Die maximale Staubaufnahme kann daher auf 80% oder 70% begrenzt werden, um den technischen Aufwand für den erfindungsgemäßen Reinigungsroboter in angemessenen Grenzen halten zu können. Eine Messung der maximalen Staubaufnahme DPU erfolgt insbesondere gemäß Norm IEC 62885. In einer technisch aufwändigeren Ausgestaltung beträgt die maximale Staubaufnahme höchstens 99%.

Die Faseraufnahme beträgt vorzugsweise mindestens 60% (Kategorie 3 von 5 - Good), bevorzugt mindestens 70%, besonders bevorzugt 80% (Kategorie 4 von 5 - Very Good). Ein Mindestwert von 60% trägt zu einer zuverlässigen Flächenleistung bei. Die Faseraufnahme beträgt insbesondere höchstens 90%. Eine Begrenzung auf 90% ermöglicht einen einfachen Aufbau und geringeres Gewicht des Reinigungsroboters. In einer technisch aufwändigeren Ausgestaltung beträgt die Faseraufnahme höchstens 100% (Kategorie 5 von 5 - Excellent). Eine Messung der Faseraufnahme erfolgt auf Hartboden oder - insbesondere wenn der Reinigungsroboter ein Saugroboter ist - auf Teppich (Wilton BIC3) gemäß Norm IEC 62885 (beispielsweise basierend auf einer Einstufung in die Kategorien 1 bis 5).

Vorzugsweise liegt die Grobgutaufnahme bei 100%. Grobe Partikel tragen sehr häufig zur täglichen Verschmutzung bei. Daher ist es von Vorteil, wenn der Reinigungsroboter so ausgelegt ist, dass solche Partikel zu 100 % aufgenommen werden. Eine Messung der Grobgutaufnahme erfolgt bevorzugt auf einer Hartboden-Fläche, insbesondere gemäß IEC 62885-2:2016. Wenn der Reinigungsroboter ein Saugroboter ist, kann alternativ - insbesondere wenn der Reinigungsroboter ein Saugroboter ist - Teppich gemäß Norm IEC 62885 bevorzugt als Untergrund für die Messung genutzt werden, vorzugsweise der Standardtestteppich BIC3 (Wilton Teppich, insbesondere gemäß IEC 62885-2:2016, Annex C.1 - Wilton Carpet).

Die maximale Laufzeit bei DPU>50% beträgt größer als 60 Minuten, vorzugsweise mindestens 80 Minuten, besonders bevorzugt bei mehr als 100 Minuten. Der erfindungsgemäße Sauroboter kann bei diesem Wert problemlos mehrmals täglich eingesetzt werden. Es wurde erkannt, dass ein Wert von mehr als 180 Minuten nicht erforderlich für den geplanten Einsatzzweck und zur Erzielung der oben beschriebenen Wirkung ist, gleichzeitig jedoch das Gewicht bedingt durch die hierfür benötigten, zusätzlichen Energiebedarf durch Akkus erhöhen würde. Daher wird in einer Ausgestaltung die maximale Laufzeit bei DPU>50% auf weniger als 180 Minuten beschränkt.

In einer Ausführungsform, die ein separater Aspekt der Erfindung sein kann, beträgt ein Qualitätsfaktor Q des Reinigungsroboters mindestens 1,3 m²/Wh, bevorzugt mehr als 1,8 m²/Wh, besonders bevorzugt mehr als 2 m²/Wh und/oder höchstens 4,7 m²/Wh. Der eingangs beschriebene Vorteil der Erfindung für ein besonders effizientes Reinigen im Haushalt auch von entlegenen Stellen, in die Schmutz in der Regel durch Luftströmungen transportiert wird, kann hierdurch besonders einfach umgesetzt werden. Der Qualitätsfaktor ermöglicht eine entsprechende Konfigurierung des Reinigungsroboters unter Berücksichtigung der Vielzahl von Eingangsgrößen, deren Zusammenhänge mit dem oben beschriebenen Effekt im Zuge der vorliegenden Erfindung erkannt wurden.

Zur Ermittlung des Qualitätsfaktors Q gilt folgende Formel:

$$Q = \frac{A}{E} \cdot R$$

Die Flächenleistung A wurde bereits oben definiert und die Berechnungsweise erläutert. Die Reinigungsqualität R lässt sich aus den in der Staubsaugerentwicklung üblichen und in der Norm IEC-62885-7 definierten Messgrößen für die Staubaufnahme DPU (dust pick-up rate) in [%], die Faseraufnahme F in [%] (beispielsweise basierend auf einer Einstufung in die Kategorien 1 bis 5) und die Grobgutaufnahme G in [%] wie folgt ermitteln:

$$R = \frac{DPU}{100\%} \cdot \frac{F}{100\%} \cdot \frac{G}{100\%}$$

Der Energiegehalt E mit der Einheit Wh (Watt-Stunden) ist der gesamte Energiegehalt des mindestens einen Akkus des Reinigungsroboters nach einem vollständigen Aufladen. Dieser gesamte Energiegehalt genügt, um die Flächenleistung $A$ zu erbringen, d.h., die Fläche mit der Größe A bei DPU > 50% zu reinigen.

Zum Vergleich erzielt der Vorwerk VR200 Reinigungsroboter einen Qualitätsfaktor von 0,76 m²/Wh und dessen Nachfolgemodell VR300 einen Qualitätsfaktor von 0,91 m²/Wh.

Der Reinigungsroboter Neato D7 erzielt einen Konfigurationskennwert Q von 0,75 m²/Wh. Insbesondere ist Q kleiner als 4 m²/Wh. Ein höherer Q-Wert würde einen hoch komplexen Aufbau und dadurch bedingt einen übermäßig hohen Herstellungsaufwand erfordern. Die maximale Staubaufnahme DPU beträgt 49% beim VR 300, 41% beim VR 200 und 30 % beim Neato D7. Diese und die nachfolgenden Werte wurden auf Wilton Teppich ermittelt. Die Grobgutaufnahme G lag beim VR 300 und VR 200 bei 99% und beim Neato D7 bei 91 %. Die maximale Geschwindigkeit bei DPU > 50% beträgt bei dem VR 300, VR 200 und Neato D7 0,2 m/s und die Faseraufnahme liegt bei allen drei Geräten bei 80%. Die Reinigungsbreite entsprach im Wesentlichen der Breite der Kehrwalze, also 0,24 m beim VR 300 und VR 200 sowie 0,27 m beim Neato D7. Bedingt durch die Akku-Kapazität i.H.v. 74 Wh beim VR200 und VR300 sowie 51 Wh beim Neato D7 war eine Reinigungsdauer bzw. maximale Laufzeit bei DPU > 50%, beim VR200 und VR300 bei beiden Geräten 1 Stunde sowie 0,9 Stunden beim Neato D7.

In einer Ausführungsform, die ein separater Aspekt der Erfindung sein kann, beträgt ein Konfigurationskennwert K des Reinigungsroboters mindestens 180 Wh⁻¹, bevorzugt K > 200 Wh⁻¹, besonders bevorzugt K > 220 Wh⁻¹, ganz besonders bevorzugt K > 240 Wh⁻¹ . Bevorzugt ist K kleiner als 935 Wh⁻¹, weil ein höherer K-Wert zu einem übermäßig hohen Herstellungsaufwand infolge des dafür erforderlichen, komplexen Aufbau des Reinigungsroboters führen würde.

Der Konfigurationskennwert K ist wie folgt definiert:

$$K = \frac{H \cdot A}{V \cdot E} \cdot R$$

Der Konfigurationskennwert entspricht daher

$$K = \frac{H}{V} \cdot Q$$ mit dem oben erläuterten Qualitätskennwert. Die Variablen *A*, *E* und *R* sind daher analog zum Qualitätskennwert definiert.

Die Bauhöhe H beschreibt die Bauhöhe des Reinigungsroboters in [m], also Meter. Die Bauhöhe ist die lichte Höhe des Reinigungsroboters im Betrieb, die anzeigt, welche Durchfahrtshöhe unter Gegenständen wie Möbeln für den Reinigungsroboter ohne Spiel noch möglich ist. Das Staubbehältervolumen V ist das Behältervolumen des Behälters, in dem aufgesaugte Partikel gesammelt werden, mit der Einheit [m³], also Kubikmeter. Ein Staubbehälter kann ein Staubbeutel sein. Insbesondere beträgt das Staubbehältervolumen V mindestens 0,0009 m³ und/oder höchstens 0,0025 m³.

Je höher der Konfigurationskennwert ist, umso besser ist der Reinigungsroboter für den genannten Einsatzzweck geeignet. Übliche Reinigungsroboter für Privathaushalte sowie für den industriellen Einsatz weisen deutlich niedrigere Konfigurationskennwerte auf und sind daher weniger geeignet. Der Haushalts-Reinigungsroboter VR200 kommt beispielsweise auf einen Wert von K = 86 Wh⁻¹ und der VR300 auf einen Wert von K = 103 Wh⁻¹. Die Bauhöhe des VR200 und VR300 beträgt 8 cm bei einem Gewicht W von 5 kg. Die Flächenleistung A des VR200 und VR300, d.h., bei DPU > 50%, liegt bei 129,6 m² und das Staubbehältervolumen bei 0,00053 m³, also 0,53 L.

Die vorhergehende Ausführungsform mit dem Qualitätsfaktor Q und die Ausführungsform mit dem Konfigurationskennwert K können jeweils separate Aspekte der Erfindung sein, die sich auf einen Reinigungsroboter zur Durchführung des Verfahrens gemäß dem eingangs beschriebenen Aspekt der Erfindung beziehen können. Beide Aspekte der Erfindung spezifizieren einen Reinigungsroboter mithilfe eines Parameterbereiches für den Qualitätsfaktor Q bzw. den Konfigurationskennwert K. Es wird hierdurch eine Anleitung bereitgestellt, die es ermöglicht, die relevanten Gerätemerkmale in einem für die oben erläuterte Einsatzbestimmung optimalen Verhältnis aufeinander abzustimmen.

Wenn ein Reinigungsroboter so ausgelegt wird, dass der angegebene Mindestwert für den Qualitätsfaktor Q bzw. des Konfigurationskennwert K erreicht wird, kann mit diesem Reinigungsroboter auf besonders Ressourcen-effiziente Weise eine Wohnung und dessen Bodenfläche (wie im Zusammenhang mit dem eingangs beschriebenen Aspekt des erfindungsgemäßen Verfahrens beschrieben) stets in einem von Schmutz gereinigten Zustand gehalten werden. Die Merkmale, Ausführungsformen und Definitionen, die im Zusammenhang mit den vorhergehend beschriebenen Erfindungsaspekten beschrieben wurde, können daher auch auf diese Aspekte der Erfindung mit dem Qualitätsfaktor Q bzw. dem Konfigurationskennwert K angewendet werden. Auch bei diesen Aspekten der Erfindung ist der Reinigungsroboter mit mindestens einem Sensor zur Detektion von Hindernissen und zur Kartierung der Umgebung ausgestattet und/oder zur Durchführung einer Reinigungsfahrt nach einer auf Basis von Sensorsignalen des Sensors geplanten Route eingerichtet. Der Reinigungsroboter weist Räder zum Fortbewegen in eine Fahrtrichtung und einen Reinigungsmechanismus für das Reinigen auf. Die Räder und der Reinigungsmechanismus werden durch mindestens einen Motor angetrieben, der mithilfe mindestens eines Akkus des Reinigungsroboters mit elektrischer Energie versorgt wird. Wenn der Reinigungsroboter ein Saugroboter ist, umfasst dieser ein Gebläse, durch das Luft angesaugt werden kann, einen Behälter, in dem aufgesaugte Partikel gesammelt werden, sowie wenigstens einen Filter, durch den angesaugte, mit Partikeln beladene Luft von Staub getrennt wird. Der Saugroboter kann eine durch den Motor angetriebene Kehreinheit umfassen, die als eine Komponente des Reinigungsmechanismus das Aufnehmen von Partikeln unterstützt. Bevorzugt ist die Kehreinheit bei einem Saugroboter eine Kehrwalze. Die Kehrwalze dreht sich während einer Reinigung. Es können dadurch Partikel auf der zu reinigenden Fläche erfasst werden und in den Saugroboter hinein transportiert werden. Insbesondere kann bei Vorsehen einer Kehrwalze die Reinigungsbreite vereinfachend auch mit der Breite der Kehrwalze gleichgesetzt werden. Der Reinigungsroboter kann ein Kehrroboter sein, der nicht saugen kann. Der Reinigungsmechanismus umfasst dann eine durch den Motor bewegbare Kehreinheit mit einer oder mehreren Kehrbüsten wie z.B. Eckbürsten, mit denen Schmutzpartikel (ohne ein Ansaugen) auf der zu reinigenden Fläche erfasst und in den Reinigungsroboter hinein transportiert werden. Der Reinigungsroboter kann ein Wischroboter sein, bei dem der Reinigungsmechanismus ein Wischelement zum Reinigen durch feuchtes Wischen umfasst. Der Reinigungsroboter hat ein Gewicht W von weniger als 20 kg und eine maximal mögliche Betriebsgeschwindigkeit von weniger als 1,50 km/h.

Die oben erwähnte, bevorzugte Obergrenze für den Q-Wert von $Q = 4,7$ m²/Wh wird wie auch die oben erwähnte, bevorzugte Obergrenze für den K-Wert von $K = 935$ Wh$^{-1}$ beispielsweise für einen als Saugroboter ausgestalteten Reinigungsroboter vorzugsweise auf Wilton Teppich gemessen mit den Parametern einer Reinigungsbreite von 32 cm, die der Breite der Bürstenwalze entsprechen kann, $v_{max} = 0,41$ m/s, $A = 945$ m², DPU = 99%, F = 100%, G = 100% und T = 2 h sowie ein Staubbehältervolumen $V = 0,0025$ m³, einen gesamten Energiegehalt $E = 200$ Wh und eine Bauhöhe von 0,5 m. Ein solcher Reinigungsroboter kann ferner beispielsweise ein Bauvolumen BV = 38 L eine Filterfläche $V = 900$ cm² und/oder eine maximal mögliche Betriebsgeschwindigkeit von $S_{max} = 1,5$ km/h aufweisen.

In einer Ausführungsform weist der Reinigungsroboter von oben betrachtet eine D-Form auf. Die D-Form ermöglicht die Umsetzung der Erfindung in besonders effektiver Art und Weise. Vorzugsweise hat der Reinigungsroboter vorne, also in Fahrtrichtung, eine geradlinige Frontkontur und/oder hinten eine gebogene oder c-förmige Außenkontur.

In einer Ausführungsform umfasst der Reinigungsroboter eine Schnittstelle für eine drahtlose Datenübertragung. Dies ermöglicht eine Übertragung der Sensorsignale des Sensors zu einer externen Rechnereinheit und/oder dem Empfangen von Daten für die Reinigungsfahrt von einer externen Rechnereinheit zum Reinigungsroboter.

Beispielsweise kann einem Benutzer auf diese Weise eine auf Basis der Sensorsignale des Sensors erstellte Karte der Umgebung oder eine Route für eine Reinigungsfahrt auf einem Smartphone angezeigt werden. Beispielsweise kann eine Kartierung und/oder Erstellung einer Karte der Umgebung auf einem Server-Computer erfolgen. Insbesondere kann der Reinigungsroboter eine von dem Server-Computer berechnete Route für die Reinigungsfahrt abfahren. Der Reinigungsroboter kann insbesondere eigenständig ein Hindernis durch den Sensor erkennen und durch Ändern der Route darauf reagieren. In einer Ausgestaltung verfügt der Reinigungsroboter über eine Steuerungseinheit. Vorzugsweise ist ein Prozessor und ein Speicher für digitale Informationen vorgesehen. Insbesondere ist die Steuerungseinheit so eingerichtet, dass diese anhand von Befehlen, die beispielsweise auf dem Speicher speicherbar sind, den Reinigungsroboter zur Ausführung der Befehle veranlasst.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:

Figur 1: Schematische, isometrische Darstellung eines Reinigungsroboters;

Figur 2: Schematische Darstellung eines Reinigungsroboters von unten;

Figur 3: Schematische Darstellung eines Reinigungsroboters in der Draufsicht, der sich in Fahrtrichtung bewegt und eine verschmutzte Fläche reinigt.

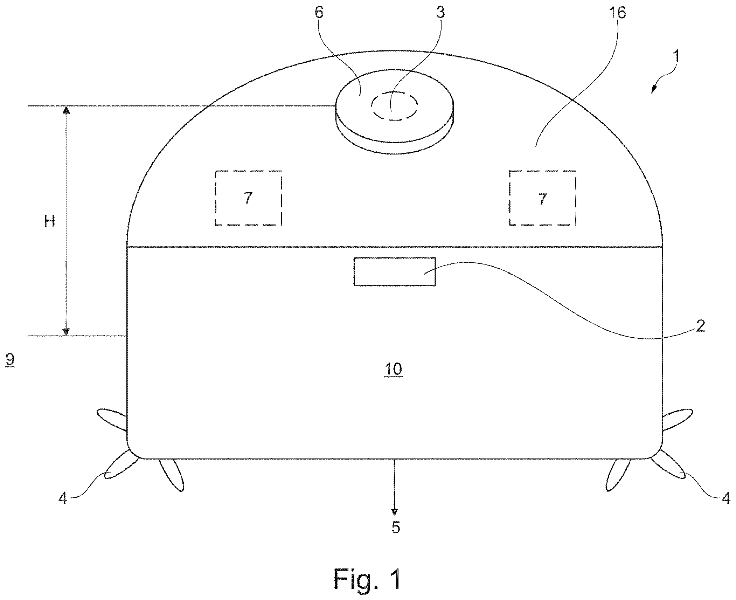

Figur 1 zeigt eine schematische, isometrische Darstellung eines Reinigungsroboters 1 von vorne. Der Reinigungsroboters 1 ist mit einem Sensor 2 zur Detektion von Hindernissen und einem Sensor 3 zur Kartierung der Umgebung ausgestattet. Eine nicht dargestellte Steuerungseinheit ermittelt auf Basis der Sensorsignale des Sensors 3, optional auch der Sensorsignale des Sensors 2, eine Route. Die auf diese Weise geplante Route kann von dem Reinigungsroboter 1 selbsttätig abgefahren werden. Die Energie wird durch Akkus 7 bereitgestellt. Vorzugsweise ist der Sensor 2 ein Abstandssensor, der Messwerte zur Ermittlung von Abständen zu Hindernissen, wie beispielsweise Möbelstücken oder Raumbegrenzungen, erfassen kann. Der Sensor 2 ist an der Vorderseite 10 angeordnet. Der Sensor 3 ist bevorzugt an der Oberseite 16 des Reinigungsroboters 1 angeordnet. Der Sensor 2 und/oder der Sensor 3 arbeiten bevorzugt berührungslos, beispielsweise mit Hilfe von Licht, Infrarotstrahlung und/oder Ultraschall. Insbesondere ist der Sensor 3 für eine 360°-Abstandsmessung eingerichtet, beispielsweise mit einem optischen Triangulationssystem, welches auf einer um eine Vertikalachse rotierenden Plattform oder dergleichen angeordnet ist. Eine scheibenförmige Abdeckung 6 schützt den Sensor 3 von oben. Optional können nach innen rotierende Bürsten 4 vorgesehen werden, um groben Schmutz unter den Reinigungsroboter zu befördern. Der Reinigungsroboter 1 bewegt sich in Fahrtrichtung 5, also vorwärts, über die zu reinigende Fläche 9. Der Reinigungsroboter 1 hat von oben betrachtet eine D-Form.

Der gezeigte Reinigungsroboter 1 hat eine Bauhöhe H = 0,175 m (gemessen von der Fläche 9 im aufgesetzten Zustand des Reinigungsroboters 1 bis zur obersten Außenkontur, hier insbesondere in Form der Oberseite der Abdeckung 6), ein Gewicht W = 8,2 kg, eine maximal mögliche Betriebsgeschwindigkeit $S_{max}$ = 1,5 km/h und eine Flächenleistung A = 806,4 m$^2$ bei DPU > 50%, die sich aus der Formel A = $v_{max} \cdot s_B \cdot T \cdot 3600$ mit einer maximalen Geschwindigkeit $v_{max}$ = 0,4 m/s bei DPU > 50%, einer Reinigungsbreite $s_B$ = 0,28 m sowie einer maximale Laufzeit T = 2 h (bei $v_{max}$ = 0,4 m/s) ergibt. Der in Figur 1 gezeigte Reinigungsroboter ist insbesondere ein Saugroboter, der für Messungen vorzugsweise auf Wilton Teppich betrieben wurde.

Der gezeigte Reinigungsroboter 1 hat einen Qualitätskennwert Q = 2,365 m2/Wh, der sich mit der Formel

$$Q = \frac{A}{E} \cdot R$$

aus der Flächenleistung A = 806,4 m$^2$ bei DPU > 50%, dem gesamten Energiegehalt E = 150 Wh des mindestens einen Akkus 7, hier insbesondere zwei Akkus 7, und der Reinigungsqualität R = 0,44 als das Produkt aus DPU = 55%, einer Faseraufnahme F = 80% und einer Grobgutaufnahme G = 100% ergibt. Der gezeigte Reinigungsroboter hat einen Konfigurationskennwert K = 345 Wh$^{-1}$, der durch die Formel

$$K = \frac{H}{V} \cdot Q$$

definiert ist. Die Bauhöhe H beträgt 0,175 m und das Staubbehältervolumen V beträgt 0,0012 m$^3$, also 1,2 L. Der Wert Q beträgt wie oben ermittelt = 2,365 m2/Wh.

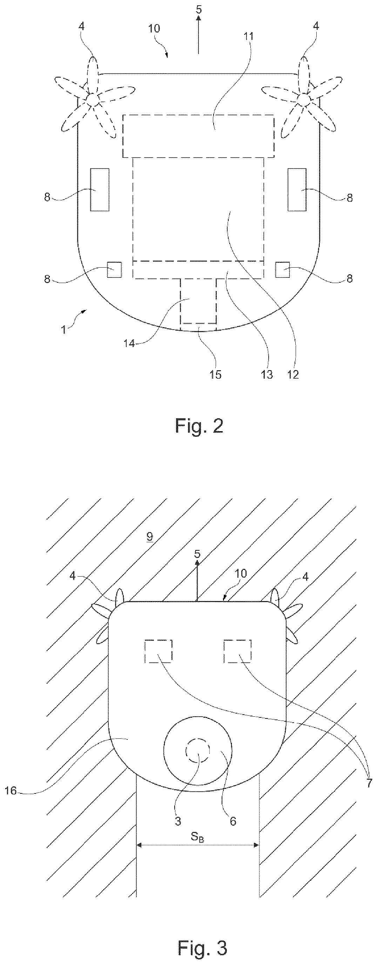

Die Figur 2 zeigt einen Reinigungsroboter 1 von unten. Insbesondere sind vier Räder 8 vorhanden, von denen die hinteren beiden Räder 8 wie dargestellt als Rollen ausgestaltet sein können. Optional sind ein oder zwei Bürsten 4 vorgesehen.

In einer Ausgestaltung ist der Reinigungsroboter 1 ein Saugroboter ohne eine Kehreinheit. Das erste Element 11 des Reinigungsmechanismus ist in dieser Ausgestaltung eine Düse zum Einsaugen von Schmutz von der Fläche 9, das zweite Element 12 des Reinigungsmechanismus ein Staubbehälter und das dritte Element 13 des Reinigungsmechanismus ein Filter. Stromabwärts vom dritten Element 13 des Reinigungsmechanismus befindet sich der Motor 14 und das durch den Motor 14 angetriebene Gebläse sowie eine Schnittstelle 15 zum Auslassen der angesaugten und gefilterten Luft.

In einer Ausgestaltung ist der Reinigungsroboter 1 ein Saugroboter mit einer Kehreinheit. Das erste Element 11 des Reinigungsmechanismus umfasst in dieser Ausgestaltung eine durch den Motor 14 angetriebene Kehrwalze und eine Einsaugöffnung. Die Kehrwalze mit radial abstehenden Borsten löst im Betrieb Schmutz von der zu reinigenden Fläche 9 und bewegt den Schmutz durch eine Rotationsbewegung zur Saugöffnung, die sich insbesondere länglich und/oder parallel zur Rotationsachse der Reinigungswalze erstreckt. Das zweite Element 12 des Reinigungsmechanismus ist ein Staubbehälter und das dritte Element 13 des Reinigungsmechanismus ein Filter. Stromabwärts vom dritten Element 13 des Reinigungsmechanismus befindet sich der Motor 14 und das durch den Motor 14 angetriebene Gebläse sowie eine Schnittstelle 15 zum Auslassen der angesaugten und gefilterten Luft. Insbesondere ist der Reinigungsroboter 1 der Figur 1 ein Reinigungsroboter 1 gemäß dieser Ausgestaltung.

In einer Ausgestaltung ist der Reinigungsroboter 1 ein Kehrroboter. Die in dieser Ausgestaltung als Eckbürsten oder Topfbürsten um eine vertikale Drehachse rotierenden Bürsten 4 lösen Schmutz von der Fläche 9 und bewegen den Schmutz zum ersten Element 11 des Reinigungsmechanismus, das in dieser Ausgestaltung eine Schmutzaufnahme ist. Die Bürsten 4 werden von dem Motor 14 angetrieben. Der Schmutz, der mithilfe der Schmutzaufnahme aufgenommen wird, gelangt in den Staubbehälter, der das zweite Element 12 des Reinigungsmechanismus darstellt und den Schmutz aufbewahrt. Das dritte Element 13 des Reinigungsmechanismus ist die Aufnahme für das zweite Element 12 für ein bewegungsfestes aber für den Benutzer manuell lösbares Aufnehmen des zweiten Elements 12 in dem Reinigungsroboter 1. Wie auch für alle anderen Ausgestaltungen kann die Schnittstelle 15 insbesondere elektrische Kontakte zum Aufladen des mindestens einen Akkus 7 umfassen.

In einer Ausgestaltung ist der Reinigungsroboter 1 ein Wischroboter. Das erste Element 11 des Reinigungsmechanismus ist in dieser Ausgestaltung ein Wischelement. Insbesondere kann das erste Element 11 durch den Motor 14 zum Ausführen einer Relativbewegung relativ zur Vorderseite 10 des Reinigungsroboters 1 angetrieben werden. Das Wischelement ist insbesondere ein im Wesentlichen rechteckig geformtes Element aus einem Gewebe oder Schwamm-Material, das von dem Motor 14 translatorisch bewegt und/oder vibriert wird. Das Wischelement kann auch eine längliche Rollenform mit einer Oberfläche aus Gewebe oder Schwamm-Material haben und von dem Motor 14 rotiert werden. Das Wischelement, insbesondere das Gewebe oder Schwamm-Material, ist zur Aufnahme und vorübergehender Speicherung von Wasser bestimmt, so dass die Fläche 9 feucht gereinigt werden kann. Das Material zur Aufnahme von Wasser ist vorzugsweise ein Tuch oder Mob. Das Wischelement kann eine Halterung für das wasseraufnehmende Material und das wasseraufnehmende Material umfassen. Vorzugsweise kann das wasseraufnehmende Material vom Benutzer manuell gewechselt werden. Optional können die Bürsten 4 ebenfalls als Wischelemente ausgestaltet sein, die dann um eine vertikale Achse von dem Motor zur Mitte des Reinigungsroboters 1 gedreht werden können. In diesem Fall kann das erste Element 11 eine Aufnahme für den Schmutz sein.

Das zweite Element 12 des Reinigungsmechanismus stellt in dieser Ausgestaltung, in der der Reinigungsroboter 1 ein Wischroboter ist, einen Staubbehälter dar, der den feucht aufgewischten Staub und Schmutz aufbewahrt. Das zweite Element 12 kann auch ein weiteres Wischelement umfassen. Das dritte Element 13 des Reinigungsmechanismus umfasst insbesondere einen Tank für Reinigungsflüssigkeit, die beispielsweise im einfachsten Fall Wasser ist. Die Schnittstelle 15 kann zum Befüllen des Tanks dienen und/oder elektrische Kontakte zum Aufladen des mindestens einen Akkus 7 umfassen.

In einer Ausgestaltung ist der Reinigungsroboter 1 ein Wischroboter, bei dem das erste Element 11 des Reinigungsmechanismus ein Wischelement (wie in der vorhergehend beschriebenen Ausgestaltung) und eine Saugöffnung zum Aufsaugen von Schmutz umfasst. In dieser Ausgestaltung ist das zweite Element 12 des Reinigungsmechanismus ein Staubbehälter und das dritte Element 13 des Reinigungsmechanismus ein Filter. Stromabwärts vom dritten Element 13 des Reinigungsmechanismus befindet sich der Motor 14 und das durch den Motor 14 angetriebene Gebläse sowie eine Schnittstelle 15 zum Auslassen der angesaugten und gefilterten Luft.

In einer Ausgestaltung des als Wischroboter konfigurierten Reinigungsroboters 1 weist der Reinigungsroboter 1 im Vergleich zu dem in Figur 1 gezeigten Reinigungsroboter 1 einen größeren, gesamten Energiegehalt E = 200 Wh auf, um die Flächenleistung A = 806,4 $m^2$ bei DPU > 50% zu erzielen. Die maximale Geschwindigkeit bei DPU > 50% ist mit $v_{max}$ = 0,3 m/s in dieser Ausgestaltung geringer. Die Bauhöhe H wurde auf 16,2 cm reduziert. Die übrigen Parameter des Reinigungsroboters 1 dieser Ausgestaltung entsprechen im Wesentlichen den Werten, die für den in Figur 1 gezeigten Reinigungsroboter 1 oben angegeben sind. Beim Wischen auf einer zu reinigenden Fläche entsteht bei dem Wischroboter dieser Ausgestaltung ein größerer Reibwiderstand als bei dem Reinigungsroboter 1 der Figur 1. Bei der Konfiguration des als Wischroboter konfigurierten Reinigungsroboters 1 dieser Ausgestaltung beträgt der Qualitätsfaktor Q = 1,33 und der Konfigurationsparameter K = 180 Wh$^{-1}$. Der in dieser Weise konfigurierte Reinigungsroboter 1 ist daher ebenfalls für den erfindungsgemäßen Einsatzzweck geeignet und eingerichtet.

Die Figur 3 verdeutlicht die Reinigungsbreite $S_B$, wenn ein Reinigungsroboter 1 in Fahrrichtung 5 geradeaus über eine zu reinigende Fläche 9 fährt, die (wie die Schraffur symbolisiert) verschmutzt ist. Der Reinigungsroboter 1 weist optional einen Sensor 3 an der Oberseite 16 auf, der durch eine Abdeckung 6 geschützt wird. Insbesondere sind zwei Akkus 7 vorgesehen. Wenn der Reinigungsroboter 1 über die zu reinigende Fläche 9 fährt, bewegen Bürsten 4 groben Schmutz unter den Reinigungsroboter 1. Bei der Bestimmung des dust pickup Wertes (DPU) wird gemäß der IEC-62885 für die Reinigungsbreite $S_B$ lediglich die Breite der Saugöffnung zugrunde gelegt. Die Reinigungsbreite $S_B$ ist in Figur 3 durch einen Streifen ohne Schraffur hinter dem Reinigungsroboter 1 illustriert, der von dem Reinigungsroboter 1 mit einem DPU-Wert von > 50% beim Überfahren gereinigt worden ist.

Bezugszeichenliste:

| | |
|---|---|
| 1 | Reinigungsroboter |
| 2 | Sensor zur Detektion von Hindernissen |
| 3 | Sensor zur Kartierung der Umgebung |
| 4 | Bürsten |
| 5 | Fahrtrichtung |
| 6 | Abdeckung |
| 7 | Akku |
| 8 | Räder |
| 9 | zu reinigende Fläche |
| 10 | Vorderseite |
| 11 | erstes Element des Reinigungsmechanismus |
| 12 | zweites Element des Reinigungsmechanismus |
| 13 | drittes Element des Reinigungsmechanismus |
| 14 | Motor |
| 15 | Schnittstelle |
| 16 | Oberseite |

**Patentansprüche**

1. Verfahren zur Reinigung einer Fläche (9) in einem Privathaushalt mit einem Reinigungsroboter (1), der mit mindestens einem Sensor (2, 3) zur Detektion von Hindernissen und zur Kartierung der Umgebung ausgestattet ist und/oder eine Reinigungsfahrt nach einer auf Basis von Sensorsignalen des Sensors (2, 3) geplanten Route durchführt, wobei der Reinigungsroboter (1) Räder (8) zum Fortbewegen in eine Fahrtrichtung (5) und einen Reinigungsmechanismus für das Reinigen aufweist, wobei die Räder (8) und der Reinigungsmechanismus durch mindestens einen Motor (14) angetrieben werden, der mithilfe mindestens eines Akkus (7) des Reinigungsroboters (1) mit elektrischer Energie versorgt wird, **dadurch gekennzeichnet, dass** der Reinigungsroboter (1) eine Bauhöhe H von 0,12 m bis 0,5 m, ein Gewicht W von weniger als 20 kg, eine maximal mögliche Betriebsgeschwindigkeit $S_{max}$ von weniger als 1,50 km/h und eine Flächenleistung A von 220 $m^2$ bis 950 $m^2$ bei einer Staubaufnahme-Rate, abgekürzt DPU, von der zu reinigenden Fläche (9) von DPU > 50% aufweist, wobei die Flächenleistung A mit der Einheit [$m^2$] die Größe einer Fläche beschreibt, die nach einem vollständigen Aufladen aller Akkus (7) des Reinigungsroboters (1) bei DPU > 50% gereinigt werden kann oder die mit einer maximalen Geschwindigkeit $v_{max}$ bei DPU > 50% gemäß der Formel Flächenleistung A = $v_{max} \cdot s_B \cdot T \cdot 3600$ ist, mit $v_{max}$ = maximale Geschwindigkeit in [m/s] bei DPU > 50%, $s_B$ = Reinigungsbreite des Reinigungsroboters (1) in [m] sowie T = maximale Laufzeit in [h] bei der maximalen Geschwindigkeit $v_{max}$ bei DPU > 50%, wobei die maximale Laufzeit T die Betriebsdauer ist, die mit einer Vollladung des Akkus (7) oder der Akkus (7) des Reinigungsroboters (1) bei der maximalen Geschwindigkeit $v_{max}$, mit der das Kriterium DPU > 50% über die Reinigungsbreite $s_B$ gerade eben erfüllt wird, möglich ist, wobei die Reinigungsbreite die Breite quer zur Fahrtrichtung (5) ist, die der Reinigungsroboter (1) in der Lage ist, bei einer Vorwärtsbewegung in Fahrtrichtung (5) während einer Reinigungsfahrt zu reinigen, wobei die Fläche (9) durch den Reinigungsroboter (1) für mindestens eine Woche wenigstens zweimal täglich gereinigt wird, wobei auf der zu reinigenden Fläche (9) wenigstens ein Möbelstück mit einer Durchfahrtshöhe von nicht mehr als 10 cm vorhanden ist.

2. Verfahren nach einem der vorhergehenden Ansprüche, **dadurch gekennzeichnet, dass** der gesamte Energiegehalt E des einen Akkus (7) oder der mehreren Akkus (7) insgesamt mindestens 100 Wh und/oder höchstens 200 Wh beträgt.

3. Verfahren nach einem der vorhergehenden Ansprüche, **dadurch gekennzeichnet, dass** der Reinigungsroboter (1) durch genau zwei Akkus (7) mit elektrischer Energie versorgt wird.

4. Reinigungsroboter (1) zur Durchführung des Verfahrens nach einem der vorhergehenden Ansprüche, wobei der Reinigungsroboter (1) mit mindestens einem Sensor (2, 3) zur Detektion von Hindernissen und zur Kartierung der Umgebung ausgestattet ist und/oder zur Durchführung einer Reinigungsfahrt nach einer auf Basis von Sensorsignalen des Sensors (2, 3) geplanten Route eingerichtet ist, wobei der Reinigungsroboter (1) Räder (8) zum Fortbewegen in eine Fahrtrichtung (5) und einen Reinigungsmechanismus für das Reinigen aufweist, wobei die Räder (8) und der Reinigungsmechanismus durch mindestens einen Motor (14) angetrieben werden, der mithilfe mindestens eines Akkus (7) des Reinigungsroboters (1) mit elektrischer Energie versorgt wird, **dadurch gekennzeichnet, dass** der Reinigungsroboter (1) eine Bauhöhe von 0,12 m bis 0,5 m, ein Gewicht W von weniger als 20 kg, eine maximal mögliche Betriebsgeschwindigkeit von weniger als 1,50 km/h und eine Flächenleistung A von 220 $m^2$ bis 950 $m^2$ bei einer Staubaufnahme-Rate, abgekürzt DPU, von der zu reinigenden Fläche (9) von DPU > 50% aufweist, wobei die Flächenleistung A mit der Einheit [$m^2$] die Größe einer Fläche beschreibt, die nach einem vollständigen Aufladen aller Akkus (7) des Reinigungsroboters (1) bei DPU > 50% gereinigt werden kann oder die mit einer maximalen Geschwindigkeit $v_{max}$ bei DPU > 50% gemäß der Formel Flächenleistung A = $v_{max} \cdot s_B \cdot T \cdot 3600$ ist, mit $v_{max}$ = maximale Geschwindigkeit in [m/s] bei DPU > 50%, $s_B$ = Reinigungsbreite des Reinigungsroboters (1) in [m] sowie T = maximale Laufzeit in [h] bei der maximalen Geschwindigkeit $v_{max}$ bei DPU > 50%, wobei die maximale Laufzeit T die Betriebsdauer ist, die mit einer Vollladung des Akkus (7) oder der Akkus (7) des Reinigungsroboters (1) bei der maximalen Geschwindigkeit $v_{max}$, mit der das Kriterium DPU > 50% über die Reinigungsbreite $s_B$ gerade eben erfüllt wird, möglich ist, wobei die Reinigungsbreite die Breite quer zur Fahrtrichtung (5) ist, die der Reinigungsroboter (1) in der Lage ist, bei einer Vorwärtsbewegung in Fahrtrichtung (5) während einer Reinigungsfahrt zu reinigen.

5. Reinigungsroboter (1) nach einem der vorhergehenden Ansprüche, **dadurch gekennzeichnet, dass** das Gewicht W zwischen 5 und 18 kg liegt.

6. Reinigungsroboter (1) nach einem der vorhergehenden Ansprüche, **dadurch gekennzeichnet, dass** sein Bauvolumen BV größer als 11 L und kleiner als 40 L, vorzugsweise 15 bis 30 L, beträgt.

7. Reinigungsroboter (1) nach einem der vorhergehenden Ansprüche, **dadurch gekennzeichnet, dass** die Reinigungsbreite $s_B$ mindestens 25 cm, bevorzugt mindestens 28 cm, und höchstens 35 cm, bevorzugt höchstens 32 cm, beträgt.

8. Reinigungsroboter (1) nach einem der vorhergehenden Ansprüche, **dadurch gekennzeichnet, dass** die maximal Geschwindigkeit $v_{max}$ bei DPU > 50% wenigstens 0,3 m/s beträgt.

9. Reinigungsroboter (1) nach einem der vorhergehenden Ansprüche, **dadurch gekennzeichnet, dass** die Faseraufnahme F mindestens 80 % beträgt.

10. Reinigungsroboter (1) nach einem der vorhergehenden Ansprüche, **dadurch gekennzeichnet, dass** die Grobgutaufnahme G bei 100% liegt.

11. Reinigungsroboter (1) nach einem der vorhergehenden Ansprüche, **dadurch gekennzeichnet, dass** die maximale Laufzeit T bei DPU>50% mindestens 80 Minuten beträgt.

12. Reinigungsroboter (1) insbesondere nach einem der vorhergehenden Ansprüche zur Durchführung des Verfahrens nach Anspruch 1, wobei der Reinigungsroboter (1) mit mindestens einem Sensor (2, 3) zur Detektion von Hindernissen und zur Kartierung der Umgebung ausgestattet ist und/oder zur Durchführung einer Reinigungsfahrt nach einer auf Basis von Sensorsignalen des Sensors (2, 3) geplanten Route eingerichtet ist, wobei der Reinigungsroboter (1) Räder (8) zum Fortbewegen in eine Fahrtrichtung (5) und einen Reinigungsmechanismus für das Reinigen aufweist, wobei die Räder (8) und der Reinigungsmechanismus durch mindestens einen Motor (14) angetrieben werden, der mithilfe mindestens eines Akkus (7) des Reinigungsroboters (1) mit elektrischer Energie versorgt wird, wobei der Reinigungsroboter (1) ein Gewicht W von weniger als 20 kg und eine maximal mögliche Betriebsgeschwindigkeit von weniger als 1,50 km/h hat, wobei der Reinigungsroboter (1) einen Qualitätsfaktors Q von mindestens 1,3 m$^2$/Wh aufweist, wobei $Q = \frac{A}{E} \cdot R$, mit Energiegehalt E in [Wh] des Reinigungsroboters (1) zum Erzielen der Flächenleistung A, einer Reinigungsqualität $R = \frac{DPU}{100\%} \cdot \frac{F}{100\%} \cdot \frac{G}{100\%}$ als das Produkt aus DPU in [%], einer Faseraufnahme F in [%] und einer Grobgutaufnahme G in [%] sowie einer Flächenleistung A bei DPU > 50%, für die gilt: A = $v_{max} \cdot s_B \cdot T \cdot 3600$, mit $v_{max}$ = maximale Geschwindigkeit in [m/s] bei DPU > 50%, $s_B$ = Reinigungsbreite des Reinigungsroboters (1) in [m] und T = maximale Laufzeit in [h] bei der maximalen Geschwindigkeit $v_{max}$ bei DPU > 50%, wobei die maximale Laufzeit T die Betriebsdauer ist, die mit einer Vollladung des Akkus (7) oder der Akkus (7) des Reinigungsroboters (1) bei der maximalen Geschwindigkeit $v_{max}$, mit der das Kriterium DPU > 50% über die Reinigungsbreite $s_B$ gerade eben erfüllt wird, möglich ist, wobei DPU>50% bedeutet, dass die Staubaufnahme-Rate von der zu reinigenden Fläche mehr als 50% beträgt, wobei die Reinigungsbreite die Breite quer zur Fahrtrichtung (5) ist, die der Reinigungsroboter (1) in der Lage ist, bei einer Vorwärtsbewegung in Fahrtrichtung (5) während einer Reinigungsfahrt zu reinigen.

13. Reinigungsroboter (1) nach dem vorhergehenden Anspruch, wobei ein Konfigurationskennwert K, der durch die Formel $K = \frac{H}{V} \cdot Q$ definiert ist, einen Wert K von mindestens 180 Wh$^{-1}$, besonders bevorzugt K > 220 Wh$^{-1}$ aufweist, mit einer Bauhöhe H und einem Staubbehältervolumen V in [m$^3$], wobei $Q = \frac{A}{E}$ . R mit einem Energiegehalt E [Wh] des mindestens einen Akkus (7) des Reinigungsroboters (1), einer Reinigungsqualität $R = \frac{DPU}{100\%} \cdot \frac{F}{100\%} \cdot \frac{G}{100\%}$ als das Produkt aus DPU in [%], einer Faseraufnahme F in [%] und einer Grobgutaufnahme G in [%] sowie einer Flächenleistung A bei DPU > 50%, für die gilt: A = $v_{max} \cdot s_B \cdot T \cdot 3600$, mit $v_{max}$ = maximale Geschwindigkeit in [m/s] bei DPU > 50%, $s_B$ = Reinigungsbreite des Reinigungsroboters (1) in [m] und T = maximale Laufzeit in [h] bei der maximalen Geschwindigkeit $v_{max}$ bei DPU > 50%.

14. Reinigungsroboter (1) nach einem der vorhergehenden Ansprüche 4 bis 13, **dadurch gekennzeichnet, dass** der Reinigungsroboter (1) von oben betrachtet eine D-Form aufweist.

15. Reinigungsroboter (1) nach einem der vorhergehenden Ansprüche 4 bis 14, **dadurch gekennzeichnet, dass** der Reinigungsroboter (1) eine Schnittstelle für eine drahtlose Datenübertragung umfasst.

## Claims

1. Method for cleaning a surface (9) in a private household with a cleaning robot (1) which is provided with at least one sensor (2, 3) for detecting obstacles and for mapping the surroundings and/or performs a cleaning ride according to a route planned on the basis of sensor signals of the sensor (2, 3), wherein the cleaning robot (1) has wheels (8) for moving in a direction of travel (5) and a cleaning mechanism for cleaning, wherein the wheels (8) and the cleaning mechanism are driven by at least one motor (14) which is supplied with electrical energy by means of at least one battery (7) of the cleaning robot (1), **characterized in that** the cleaning robot (1) has an overall height H of 0.12 m to 0.5 m, a weight W of less than 20 kg, a maximum possible operating speed $S_{max}$ of less than 1.50 km/h and an area performance A of 220 m$^2$ to 950 m$^2$ at a dust pick-up, abbreviated DPU, from the surface (9) to be cleaned of DPU > 50%, wherein the area performance A with the unit $[m^2]$ describes the size of a surface that can be cleaned after a complete charging of all batteries (7) of the cleaning robot (1) at DPU > 50% or which is with a maximum speed $v_{max}$ at DPU > 50% according to the formula area performance $A = v_{max} \cdot s_B \, T \, 3600$, where $v_{max}$ = maximum speed in [m/s] at DPU > 50%, $s_B$ = cleaning width of the cleaning robot (1) in [m] and T = maximum running time in [h] at the maximum speed $v_{max}$ at DPU > 50%, wherein the maximum running time T is the operating time that is possible with a full charge of the battery (7) or batteries (7) of the cleaning robot (1) at the maximum speed $v_{max}$ at which the criterion DPU > 50% is just fulfilled over the cleaning width, wherein the cleaning width is the width transverse to the direction of travel (5), which the cleaning robot (1) is capable of cleaning during a forward movement in the direction of travel (5) during a cleaning ride, wherein the surface (9) is cleaned by the cleaning robot (1) at least twice a day for at least one week, wherein at least one piece of furniture with a clearance height of not more than 10 cm is present on the surface (9) to be cleaned.

**2.** Method according to one of the preceding claims, **characterized in that** the total energy content E of the one battery (7) or the plurality of batteries (7) is in total at least 100 Wh and/or at most 200 Wh.

**3.** Method according to one of the preceding claims, **characterized in that** the cleaning robot (1) is supplied with electrical energy by exactly two batteries (7).

**4.** Cleaning robot (1) for performing the method according to one of the preceding claims, wherein the cleaning robot (1) is provided with at least one sensor (2, 3) for detecting obstacles and for mapping the surroundings and/or is configured for performing a cleaning ride according to a route planned on the basis of sensor signals of the sensor (2, 3), wherein the cleaning robot (1) has wheels (8) for moving in a direction of travel (5) and a cleaning mechanism for cleaning, wherein the wheels (8) and the cleaning mechanism are driven by at least one motor (14) which is supplied with electrical energy by means of at least one battery (7) of the cleaning robot (1), **characterized in that** the cleaning robot (1) has an overall height of 0.12 m to 0.5 m, a weight W of less than 20 kg, a maximum possible operating speed of less than 1.50 km/h and an area performance A of 220 $m^2$ to 950 $m^2$ at a dust pick-up, abbreviated DPU, from the surface (9) to be cleaned of DPU > 50%, wherein the area performance A with the unit $[m^2]$ describes the size of a surface that can be cleaned after a complete charging of all batteries (7) of the cleaning robot (1) at DPU > 50% or which is with a

maximum speed $v_{max}$ at DPU > 50% according to the formula area performance $A = v_{max} \cdot s_B \, T \, 3600$, where $v_{max}$ = maximum speed in [m/s] at DPU > 50%, $s_B$ = cleaning width of the cleaning robot (1) in [m] and T = maximum running time in [h] at the maximum speed $v_{max}$ at DPU > 50%, wherein the maximum running time T is the operating time that is possible with a full charge of the battery (7) or batteries (7) of the cleaning robot (1) at the maximum speed $v_{max}$ at which the criterion DPU > 50% is just fulfilled over the cleaning width, wherein the cleaning width is the width transverse to the direction of travel (5), which the cleaning robot (1) is capable of cleaning during a forward movement in the direction of travel (5) during a cleaning ride.

**5.** Cleaning robot (1) according to one of the preceding claims, **characterized in that** the weight W is between 5 and 18 kg.

**6.** Cleaning robot (1) according to one of the preceding claims, **characterized in that** its construction volume BV is greater than 11 L and less than 40 L, preferably 15 to 30 L.

**7.** Cleaning robot (1) according to one of the preceding claims, **characterized in that** the cleaning width $s_B$ is at least 25 cm, preferably at least 28 cm, and at most 35 cm, preferably at most 32 cm.

**8.** Cleaning robot (1) according to one of the preceding claims, **characterized in that** the maximum speed $v_{max}$ at DPU > 50% is at least 0.3 m/s.

**9.** Cleaning robot (1) according to one of the preceding claims, **characterized in that** the fiber pickup F is at least 80%.

**10.** Cleaning robot (1) according to one of the preceding claims, **characterized in that** the coarse material pickup G is 100%.

**11.** Cleaning robot (1) according to one of the preceding claims, **characterized in that** the maximum running time T at DPU>50% is at least 80 minutes.

**12.** Cleaning robot (1), in particular according to one of the preceding claims, for performing the method according to claim 1, wherein the cleaning robot (1) is provided with at least one sensor (2, 3) for detecting obstacles and for mapping the surroundings and/or is configured for performing a cleaning ride according to a route planned on the basis of sensor signals of the sensor (2, 3), wherein the cleaning robot (1) has wheels (8) for moving in a direction of travel (5) and a cleaning mechanism for cleaning, wherein the wheels (8) and the cleaning mechanism are driven by at least one motor (14) which is supplied with electrical energy by means of at least one battery (7) of the cleaning robot (1), wherein the cleaning robot (1) has a weight W of less than 20 kg and a maximum possible operating speed of less than 1.50 km/h, wherein the cleaning robot (1) has a quality factor Q of at least 1.3 m²/Wh, wherein $Q = \frac{A}{E} \cdot R$, with energy content E in [Wh] of the cleaning robot (1) to achieve area performance A, a cleaning quality $R = \frac{DPU}{100\%} \cdot \frac{F}{100\%} \cdot \frac{G}{100\%}$ as the product of DPU in [%], a fiber pickup F in [%] and a coarse material pickup G in [%], and an area performance A at DPU > 50%, for which applies: A = $v_{max}$ $s_B$ T 3600, where $v_{max}$ = maximum speed in [m/s] at DPU > 50%, $s_B$ = cleaning width of the cleaning robot (1) in [m] and T = maximum running time in [h] at the maximum speed $v_{max}$ at DPU > 50%, wherein the maximum running time T is the operating time that is possible with a full charge of the battery (7) or batteries (7) of the cleaning robot (1) at the maximum speed $v_{max}$ at which the criterion DPU > 50% is just fulfilled over the cleaning width, wherein DPU>50% means that the dust pick-up from the surface to be cleaned is more than 50%, wherein the cleaning width is the width transverse to the direction of travel (5), which the cleaning robot (1) is capable of cleaning during a forward movement in the direction of travel (5) during a cleaning ride.

13. Cleaning robot (1) according to the preceding claim, wherein a configuration characteristic K defined by the formula $K = \frac{H}{V} \cdot Q$ has a value K of at least 180 Wh⁻¹, particularly preferably K > 220 Wh⁻¹, with an overall height H and a dust container volume V in [m³], wherein $Q = \frac{A}{E} \cdot R$ with an energy content E [Wh] of the at least one battery (7) of the cleaning robot (1), a cleaning quality $R = \frac{DPU}{100\%} \cdot \frac{F}{100\%} \cdot \frac{G}{100\%}$ as the product of DPU in [%], a fiber pickup F in [%] and a coarse material pickup G in [%] and an area performance A at DPU > 50%, for which applies: A = $v_{max}$ $s_B$ T 3600, with $v_{max}$ = maximum speed in [m/s] at DPU > 50%, $s_B$ = cleaning width of the cleaning robot (1) in [m] and T = maximum running time in [h] at the maximum speed $v_{max}$ at DPU > 50%.

14. Cleaning robot (1) according to one of the preceding claims 4 to 13, **characterized in that** the cleaning robot (1) has a D-shape when viewed from above.

15. Cleaning robot (1) according to one of the preceding claims 4 to 14, **characterized in that** the cleaning robot (1) comprises an interface for wireless data transmission.

## Revendications

1. Procédé pour nettoyer une surface (9) dans une maison privée avec un robot de nettoyage (1) qui est équipé d'au moins un capteur (2, 3) pour la détection d'obstacles et pour la cartographie de l'environnement et/ou effectue un trajet de nettoyage selon un itinéraire planifié sur la base des signaux de capteur du capteur (2, 3), dans lequel le robot de nettoyage (1) présente des roues (8) pour le déplacement dans une direction de déplacement (5) et un mécanisme de nettoyage pour le nettoyage, dans lequel les roues (8) et le mécanisme de nettoyage sont entraînés par au moins un moteur (14) qui est alimenté en énergie électrique à l'aide d'au moins un accumulateur (7) du robot de nettoyage (1), **caractérisé en ce que** le robot de nettoyage (1) présente une hauteur de construction H de 0,12 m à 0,5 m, un poids W inférieur à 20 kg, une vitesse de fonctionnement maximale possible $S_{max}$ inférieure à 1,50 km/h et un rendement de surface A de 220 m² à 950 m² pour un taux d'absorption de poussière, abrégé DPU, de la surface à nettoyer (9) de DPU > 50%, dans lequel le rendement de surface A avec l'unité [m²] décrit la taille d'une surface qui peut être nettoyée après une charge complète de tous les accumulateurs (7) du robot de nettoyage (1) à DPU > 50% ou qui est selon la formule rendement de surface A = $v_{max} \cdot s_B \cdot T \cdot 3600$ avec une vitesse maximale $v_{max}$ à DPU > 50%, avec $v_{max}$ = vitesse maximale en [m/s] à DPU > 50%, $s_B$ = largeur de nettoyage du robot de nettoyage (1) en [m] ainsi que T = durée de fonctionnement maximale en [h] à la vitesse maximale $v_{max}$ à DPU > 50%, dans lequel la durée de fonctionnement maximale T est la durée de fonctionnement qui est possible avec une charge complète du accumulateur (7) ou des accumulateurs (7) du robot de nettoyage (1) à la vitesse maximale $v_{max}$, avec laquelle le critère DPU > 50% sur la largeur de nettoyage $s_B$ est tout juste satisfait, dans lequel la largeur de nettoyage est la largeur transversale à la direction de déplacement (5) que le robot de nettoyage (1) est en mesure de nettoyer lors d'un mouvement d'avance dans la direction de déplacement (5) pendant un trajet de nettoyage, dans lequel la surface (9) est nettoyée par le robot de nettoyage (1) pendant au moins une semaine au moins deux fois par jour, dans lequel au moins un meuble ayant une hauteur de passage ne dépassant pas 10 cm est présent sur la surface (9) à nettoyer.

**2.** Procédé selon l'une des revendications précédentes, **caractérisé en ce que** le contenu énergétique total E de l'un accumulateur (7) ou des plusieurs accumulateurs (7) est au total d'au moins 100 Wh et/ou d'au plus 200 Wh.

**3.** Procédé selon l'une des revendications précédentes, **caractérisé en ce que** le robot de nettoyage (1) est alimenté en énergie électrique par exactement deux accumulateurs (7).

**4.** Robot de nettoyage (1) pour la mise en oeuvre du procédé selon l'une des revendications précédentes, dans lequel le robot de nettoyage (1) est équipé d'au moins un capteur (2, 3) pour la détection d'obstacles et pour la cartographie de l'environnement et/ou est aménagé pour effectuer un trajet de nettoyage selon un itinéraire planifié sur la base des signaux de capteur du capteur (2, 3), dans lequel le robot de nettoyage (1) présente des roues (8) pour le déplacement dans une direction de déplacement (5) et un mécanisme de nettoyage pour le nettoyage, dans lequel les roues (8) et le mécanisme de nettoyage sont entraînés par au moins un moteur (14) qui est alimenté en énergie électrique à l'aide d'au moins un accumulateur (7) du robot de nettoyage (1), **caractérisé en ce que** le robot de nettoyage (1) présente une hauteur de construction H de 0,12 m à 0,5 m, un poids W inférieur à 20 kg, une vitesse de fonctionnement maximale possible inférieure à 1,50 km/h et un rendement de surface A de 220 m$^2$ à 950 m$^2$ pour un taux d'absorption de poussière, abrégé DPU, de la surface à nettoyer (9) de DPU > 50%, dans lequel le rendement de surface A avec l'unité [m$^2$] décrit la taille d'une surface qui peut être nettoyée après une charge complète de tous les accumulateurs (7) du robot de nettoyage (1) à DPU > 50% ou qui est selon la formule rendement de surface A = $v_{max} \cdot s_B \cdot T \cdot 3600$ avec une vitesse maximale $v_{max}$ à DPU > 50%, avec $v_{max}$ = vitesse maximale en [m/s] à DPU > 50%, $s_B$ = largeur de nettoyage du robot de nettoyage (1) en [m] ainsi que T = durée de fonctionnement maximale en [h] à la vitesse maximale $v_{max}$ à DPU > 50%, dans lequel la durée de fonctionnement maximale T est la durée de fonctionnement qui est possible avec une charge complète du accumulateur (7) ou des accumulateurs (7) du robot de nettoyage (1) à la vitesse maximale $v_{max}$, avec laquelle le critère DPU > 50% sur la largeur de nettoyage $s_B$ est tout juste satisfait, dans lequel la largeur de nettoyage est la largeur transversale à la direction de déplacement (5) que le robot de nettoyage (1) est en mesure de nettoyer lors d'un mouvement d'avance dans la direction de déplacement (5) pendant un trajet de nettoyage.

**5.** Robot de nettoyage (1) selon l'une des revendications précédentes, **caractérisé en ce que** le poids W est compris entre 5 et 18 kg.

**6.** Robot de nettoyage (1) selon l'une des revendications précédentes, **caractérisé en ce que** son volume de construction BV est supérieur à 11 L et inférieur à 40 L, de préférence de 15 à 30 L.

**7.** Robot de nettoyage (1) selon l'une des revendications précédentes, **caractérisé en ce que** la largeur de nettoyage $s_B$ est d'au moins 25 cm, de préférence d'au moins 28 cm, et d'au plus 35 cm, de préférence d'au plus 32 cm.

**8.** Robot de nettoyage (1) selon l'une des revendications précédentes, **caractérisé en ce que** la vitesse maximale $v_{max}$ à DPU > 50% est d'au moins 0,3 m/s.

**9.** Robot de nettoyage (1) selon l'une des revendications précédentes, **caractérisé en ce que** l'absorption de fibres F est d'au moins 80 %.

**10.** Robot de nettoyage (1) selon l'une des revendications précédentes, **caractérisé en ce que** l'absorption de matières grossières G est de 100%.

**11.** Robot de nettoyage (1) selon l'une des revendications précédentes, **caractérisé en ce que** le temps de fonctionnement maximal T est d'au moins 80 minutes à DPU > 50%.

**12.** Robot de nettoyage (1) notamment selon l'une des revendications précédentes pour la mise en oeuvre du procédé selon la revendication 1, dans lequel le robot de nettoyage (1) est équipé d'au moins un capteur (2, 3) pour la détection d'obstacles et la cartographie de l'environnement et/ou est agencé pour effectuer un trajet de nettoyage selon un itinéraire planifié sur la base des signaux de capteur du capteur (2, 3), dans lequel le robot de nettoyage (1) présente des roues (8) pour le déplacement dans une direction de déplacement (5) et un mécanisme de nettoyage pour le nettoyage, dans lequel les roues (8) et le mécanisme de nettoyage sont entraînés par au moins un moteur (14) qui est alimenté en énergie électrique à l'aide d'au moins un accumulateur (7) du robot de nettoyage (1), dans lequel le robot de nettoyage (1) a un poids W inférieur à 20 kg et une vitesse de fonctionnement maximale possible inférieure à 1,50 km/h, dans lequel le robot de nettoyage (1) présente un facteur de qualité Q d'au moins 1,3 m$^2$/Wh, dans lequel $Q = \dfrac{A}{E} \cdot R$, avec teneur en énergie E en [Wh] du robot de nettoyage (1) pour obtenir le rendement de surface A, une qualité de nettoyage $R = \dfrac{DPU}{100\%} \cdot \dfrac{F}{100\%} \cdot \dfrac{G}{100\%}$ comme le produit de DPU en [%], d'une absorption de fibres F en [%] et d'une absorption de matières grossières G en [%] ainsi qu'un rendement de surface A à DPU > 50 %, pour lequel on a : $A = v_{max} \cdot s_B \cdot T \cdot 3600$, avec $v_{max}$ = vitesse maximale en [m/s] à DPU > 50%, $s_B$ = largeur de nettoyage du robot de nettoyage (1) en [m] et T = durée de fonctionnement maximale en [h] à la vitesse maximale $v_{max}$ à DPU > 50%, dans lequel la durée de fonctionnement maximale T est la durée de fonctionnement qui est possible avec une charge complète du accumulateur (7) ou des accumulateurs (7) du robot de nettoyage (1) à la vitesse maximale $v_{max}$, avec laquelle le critère DPU > 50% sur la largeur de nettoyage $s_B$ est tout juste satisfait, dans lequel DPU > 50% signifie que le taux d'absorption de poussière de la surface à nettoyer est supérieur à 50%, dans lequel la largeur de nettoyage est la largeur transversale à la direction de déplacement (5) que le robot de nettoyage (1) est en mesure de nettoyer lors d'un mouvement d'avance dans la direction de déplacement (5) pendant un trajet de nettoyage.

13. Robot de nettoyage (1) selon la revendication précédente, dans lequel une valeur caractéristique de configuration K, qui est définie par la formule

$$K = \frac{H}{V} \cdot Q$$

, présente une valeur K d'au moins 180 $Wh^{-1}$, plus préférentiellement K > 220 $Wh^{-1}$, avec une hauteur de construction H et un volume de réservoir à poussière V en [m³], dans lequel

$$Q = \frac{A}{E} \cdot R$$

avec une teneur en énergie E [Wh] de l'au moins un accumulateur (7) du robot de nettoyage (1), une qualité de nettoyage

$$R = \frac{DPU}{100\%} \cdot \frac{F}{100\%} \cdot \frac{G}{100\%}$$

comme le produit de DPU en [%], d'une absorption de fibres F en [%] et d'une absorption de matières grossières G en [%] ainsi qu'un rendement de surface A à DPU > 50 %, pour lequel on a : $A = v_{max} \cdot s_B \cdot T \cdot 3600$, avec $v_{max}$ = vitesse maximale en [m/s] à DPU > 50%, $s_B$ = largeur de nettoyage du robot de nettoyage (1) en [m] et T = durée de fonctionnement maximale en [h] à la vitesse maximale $v_{max}$ à DPU > 50%.

14. Robot de nettoyage (1) selon l'une des revendications précédentes 4 à 13, **caractérisé en ce que** le robot de nettoyage (1) présente une forme en D vu de dessus.

15. Robot de nettoyage (1) selon l'une des revendications précédentes 4 à 14, **caractérisé en ce que** le robot de nettoyage (1) comprend une interface pour une transmission de données sans fil.

Fig. 1

EP 4 039 150 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014207282 A1
- US 2016135655 A1
- EP 3715995 A1
- AT 10154 U1